# EUROPEAN PATENT APPLICATION

(11) **EP 4 693 472 A1**
(43) Date of publication of application: **11.02.2026**
(21) Application number: 24883837.7
(22) Date of filing: 07.05.2024
(51) Int. Cl.: H01M 4/36, H01M 4/38, H01M 4/48, H01M 4/525, H01M 10/0525

(54) **BATTERY AND ELECTRIC DEVICE**

(30) Priority: 03.11.2023 CN 202311460053
(71) Applicant: Contemporary Amperex Technology Co., Limited, Ningde, Fujian 352100 (CN)
(72) Inventor: PENG, Shuangjuan, Ningde, Fujian 352100 (CN); PENG, Lin, Ningde, Fujian 352100 (CN); LI, Baiqing, Ningde, Fujian 352100 (CN); JIN, Haizu, Ningde, Fujian 352100 (CN); ZHAO, Fenggang, Ningde, Fujian 352100 (CN); WU, Kai, Ningde, Fujian 352100 (CN)
(74) Representative: Lorenz Seidler Gossel Part. mbB
(86) International application number: PCT/CN2024/091427
(87) International publication number: WO 2025/091824

(57) **Abstract**

A battery and an electric apparatus are provided. The battery comprises an electrode plate, where the electrode plate includes a current collector and a film layer disposed on at least one side of the current collector, and the film layer includes an active material and a lyophilic polymer. An energy density of the battery is ≥ 300 Wh/kg.

## Description

### CROSS-REFERENCE TO RELATED APPLICATIONS

The present application claims priority to Chinese Patent Application No. 202311460053.7, filed on November 3, 2023 and entitled "BATTERY AND ELECTRIC APPARATUS," the entire content of which is incorporated herein by reference.

### TECHNICAL FIELD

The present application relates to a battery and an electric apparatus.

### BACKGROUND

Batteries have characteristics such as high capacity and long lifespan, and thus are widely used in electronic devices, such as mobile phones, laptop computers, electric scooters, electric vehicles, electric airplanes, electric ships, electric toy cars, electric toy ships, electric toy airplanes, and electric tools.

As the application range of batteries becomes increasingly broad, the requirements for battery performance are becoming more stringent. However, it is challenging for batteries to achieve both high energy density and cycling performance.

### SUMMARY

The present application is made in view of the above issues, with the objective of providing a battery and an electric apparatus.

According to a first aspect, the present application provides a battery, where the battery includes an electrode plate, the electrode plate includes a current collector and a film layer disposed on at least one side of the current collector, and the film layer includes an active material and a lyophilic polymer,
where an energy density of the battery is ≥ 300 Wh/kg.

Thus, in embodiments of the present application, the active material can contribute to the energy density of the battery cell, enhancing the energy density. In the embodiments of the present application, the lyophilic polymer is disposed in the film layer of the electrode plate, where the lyophilic polymer can be uniformly mixed with active material particles during slurry preparation to form the film layer. The lyophilic polymer has an affinity for the electrolyte, capable of enhancing the affinity between the electrode plate and the electrolyte. The lyophilic polymer is configured to encapsulate the electrolyte, forming effective electrolyte storage sites on the surface of the active material particles, and improving the electrolyte retention capability of the electrode plate. Enhancement in the wettability of the electrolyte to the film layer can mitigate concentration polarization, improving the cycling performance of the battery.

In some embodiments, the energy density of the battery is from 300 Wh/kg to 500 Wh/kg.

In some embodiments, the electrode plate includes a positive electrode plate, and an active material in the positive electrode plate includes a compound with a molecular formula LiₓNiₐCo_{b}M_{(1-a-b)}O₂ and its modified compounds, where 0.60 < x < 1.20, 0.85 < a < 1.00, 0 < b < 0.10, a + b < 1.00, and M includes at least one of Mn, Al, B, Zr, Sr, Y, Sb, W, Ti, La, and Nb; optionally, 0.90 ≤ a < 1.0; and further optionally, the active material in the positive electrode plate includes at least one of compounds with molecular formulas LiNi_{0.85}Co_{0.10}M_{0.05}O₂, LiNi_{0.92}Co_{0.04}Mo_{0.04}O₂, LiNi_{0.92}Co_{0.05}M_{0.03}O₂, LiNi_{0.92}Co_{0.06}M_{0.02}O₂, LiNi_{0.93}Co_{0.03}M_{0.04}O₂, and LiNi_{0.93}Co_{0.025}M_{0.045}O₂. A specific capacity of the positive electrode active material is relatively high, significantly enhancing the energy density of the battery.

In some embodiments, the active material in the positive electrode plate includes single crystal particles and polycrystalline particles, a volume-based median particle size Dᵥ50 of the single crystal particles being smaller than a volume-based median particle size Dᵥ50 of the polycrystalline particles; optionally, the volume-based median particle size Dᵥ50 of the single crystal particles is from 2 µm to 5 µm; and optionally, the volume-based median particle size Dᵥ50 of the polycrystalline particles is from 5 µm to 10 µm. The cooperation of different particle sizes of the single crystal particles and the polycrystalline particles can enhance the compacted density of the positive electrode film layer, helping to further improve the energy density of the battery cell.

In some embodiments, based on a total mass of the active material in the positive electrode plate, a mass content of the single crystal particles is from 10% to 30%. The single crystal particles having a mass content within the above range can further cooperate with the polycrystalline particles to enhance the compacted density of the positive electrode film layer, thereby improving the energy density of the battery cell.

In some embodiments, a compacted density of a film layer in the positive electrode plate is ≥ 3.6 g/cm³, optionally from 3.6 g/cm³ to 3.8 g/cm³. When the compacted density of the positive electrode film layer is within the above range, it can significantly enhance the energy density of the battery cell.

In some embodiments, the electrode plate includes a negative electrode plate, an active material in the negative electrode plate including at least a silicon-based material; where optionally, the silicon-based material includes at least one of elemental silicon, silicon oxide, silicon-carbon composite, silicon-nitrogen composite, and silicon alloy material; and optionally, based on a total mass of the active material in the negative electrode plate, a mass content of the silicon-based material is ≥ 5%; optionally, from 15% to 50%. When the mass content of the silicon-based material is within the above range, it can further enhance the energy density of the battery cell.

In some embodiments, a compacted density of a negative electrode film layer is ≥ 1.5 g/cm³, optionally from 1.5 g/cm³ to 2.0 g/cm³. A higher compacted density of the negative electrode film layer is conducive to enhancing the energy density of the battery.

In some embodiments, based on a total mass of the film layer, a mass content of the lyophilic polymer is ≤ 5%; optionally, from 0.05% to 5%; and/or a coating weight of the lyophilic polymer is from 0.5 mg/1540.25 mm² to 5 mg/1540.25 mm². When the mass content of the lyophilic polymer is within the above range, the lyophilic polymer can form multiple electrolyte storage sites on the surface of the active material particles, improving the electrolyte retention capability of the film layer, and enhancing the wettability of the electrolyte to the active material in the film layer, thereby helping to improve the cycling performance of the battery.

In some embodiments, the lyophilic polymer includes a fluorinated polymer, the fluorinated polymer having a crystallinity measured by differential scanning calorimetry and denoted as Xc₁%, where 0 < Xc₁ ≤ 28; where
a melting temperature of the fluorinated polymer is Tₘ₁°C, where 0 < Tₘ₁ ≤ 130;
further optionally, a glass transition temperature of the fluorinated polymer is T_{g1}°C, where -30 ≤ T_{g1} ≤ 40; and
further optionally, the fluorinated polymer includes at least one of a compound represented by formula (AI) to a compound represented by formula (AIII): 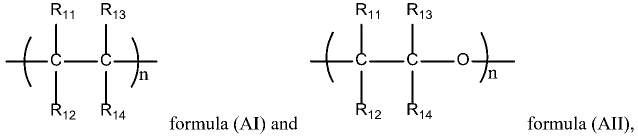
where in formula (AI) and formula (AII), R₁₁, R₁₂, R₁₃, and R₁₄ each independently include a hydrogen atom, a fluorine atom, a chlorine atom, a bromine atom, substituted or unsubstituted C1-C3 alkyl, or substituted or unsubstituted C1-C3 alkoxy, and at least one of R₁₁, R₁₂, R₁₃, and R₁₄ includes a fluorine atom; and 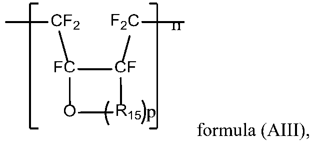
where in formula (AIII), R₁₅ includes a single bond or substituted or unsubstituted C1-C3 alkyl;
p is a positive integer selected from 1 to 3; and
n is a positive integer selected from 1000 to 30000.

Thus, the fluorinated polymer has a relatively low crystallinity, melting temperature, or glass transition temperature. The fluorinated polymer has certain mobility above the glass transition temperature, and therefore can buffer external energy through chain segment motion under external force, exhibiting certain flexibility, and capable of acting as a buffer for the charge-discharge process of the positive electrode active material or negative electrode active material during battery cell cycling, thereby mitigating cycling swelling and enhancing cycling performance.

In some embodiments, the lyophilic polymer includes an ether polymer, the ether polymer is made into a sheet-like structure, a storage modulus G' - loss modulus G" curve of the sheet-like structure is obtained by subjecting it to dynamic frequency sweep testing at (Tₘ₂ + 20)°C, and a slope of the storage modulus G' - loss modulus G" curve is K₁, where 1 < K₁ < ∞, Tₘ₂°C represents a melting temperature of the ether polymer, optionally, 1 < K₁ ≤ 100, and further optionally, 1 < K₁ ≤ 10;
optionally, a glass transition temperature of the ether polymer is T_{g2}°C, where -20 ≤ T_{g2} < 35; and
further optionally, the ether polymer includes at least one of a compound represented by formula (BI) and a compound represented by formula (BII): 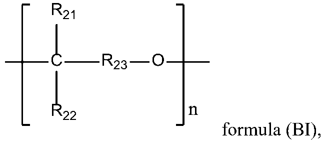
where in formula (BI), R₂₁ and R₂₂ each independently include a hydrogen atom, substituted or unsubstituted C1-C3 alkyl, or substituted or unsubstituted C1-C3 alkoxy; and R₂₃ includes substituted or unsubstituted C1-C5 alkylene; and 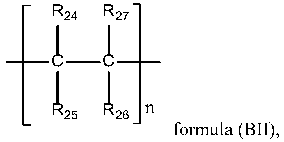
where in formula (BII), R₂₄ to R₂₇ each independently include a hydrogen atom, substituted or unsubstituted C1-C3 alkyl, substituted or unsubstituted C1-C3 alkoxy, or an ether group, and at least one of R₂₄ to R₂₇ includes substituted or unsubstituted C1-C3 alkoxy or an ether group; and
a degree of polymerization n of the ether polymer is a positive integer selected from 1500 to 25000.

Thus, when the ether polymer of the present application satisfies the above range, it can further reduce molecular chain entanglement, facilitating the diffusion of solvent molecules in the electrolyte between the molecular chains. Additionally, the ether polymer maintains a certain degree of molecular chain entanglement, capable of effectively storing the electrolyte, and improving the cycling performance of the battery cell.

In some embodiments, the lyophilic polymer includes the ester polymer, the ester polymer is made into a sheet-like structure, a storage modulus G' - loss modulus G" curve of the sheet-like structure is obtained by subjecting it to dynamic frequency sweep testing at (Tₘ₃ + 20)°C, and a slope of the storage modulus G' - loss modulus G" curve is K₂, where 1 < K₂ < ∞, Tₘ₃°C represents a melting temperature of the ester polymer, optionally, 1 < K₂ ≤ 100, and further optionally, 1 < K₂ < 10;
optionally, a glass transition temperature of the ester polymer is T_{g3}°C, where -20 ≤ T_{g3} < 35; and
further optionally, the ester polymer includes at least one of a compound represented by formula (CI) to a compound represented by formula (CIII): 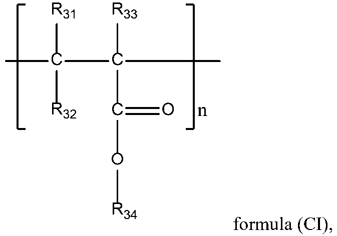
where in formula (CI), R₃₁, R₃₂, and R₃₃ each independently include a hydrogen atom or substituted or unsubstituted C1-C8 alkyl; and R₃₄ includes substituted or unsubstituted C1-C8 alkyl or substituted or unsubstituted C1-C8 hydroxyalkyl; 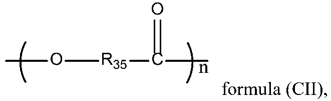
where in formula (CII), R₃₅ includes substituted or unsubstituted C2-C6 methylene; and optionally, R₃₅ independently includes substituted or unsubstituted C2-C4 methylene; and 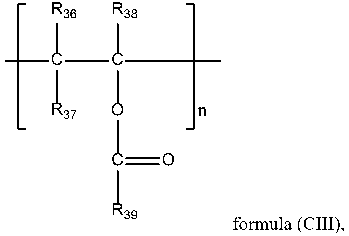
where in formula (CIII), R₃₆, R₃₇, and R₃₈ each independently include a hydrogen atom or substituted or unsubstituted C1-C8 alkyl; and R₃₉ includes substituted or unsubstituted C1-C8 alkyl;
optionally, R₃₆, R₃₇, and R₃₈ each independently include a hydrogen atom or substituted or unsubstituted C1-C4 alkyl; and
a degree of polymerization n of the ester polymer is a positive integer selected from 800 to 20000.

Thus, when the ester polymer of the present application satisfies the above range, it can further reduce molecular chain entanglement, facilitating the diffusion of solvent molecules in the electrolyte between the molecular chains. Additionally, the ester polymer maintains a certain degree of molecular chain entanglement, capable of effectively storing the electrolyte, and improving the cycling performance of the battery cell.

In some embodiments, the lyophilic polymer includes an aldehyde-ketone polymer, the aldehyde-ketone polymer is made into a sheet-like structure, a storage modulus G' - loss modulus G" curve of the sheet-like structure is obtained by subjecting it to dynamic frequency sweep testing at (Tₘ₄ + 20)°C, a slope of the storage modulus G' - loss modulus G" curve is K₃, where 0.8 ≤ K₃ < ∞, Tₘ₄°C represents a melting temperature of the aldehyde-ketone polymer, optionally, 0.8 ≤ K₃ ≤ 100, and further optionally, 0.8 ≤ K₃ ≤ 10;
optionally, a glass transition temperature of the aldehyde-ketone polymer is T_{g4}°C, where -20 ≤ T_{g4} < 35; and
further optionally, the aldehyde-ketone polymer includes at least one of a compound represented by formula (DI) and a compound represented by formula (DII): 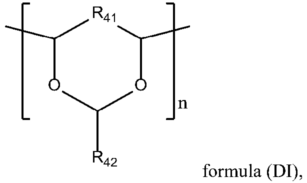
where in formula (DI), R₄₁ includes a single bond or substituted or unsubstituted C1-C6 methylene; and R₄₂ includes a hydrogen atom or substituted or unsubstituted C1-C6 alkyl; and 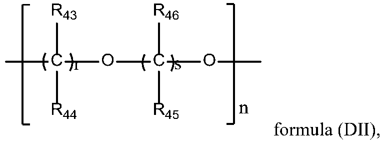
where in formula (DII), R₄₃ to R₄₆ each independently include a hydrogen atom, a hydroxyl group, substituted or unsubstituted C1-C3 alkyl, substituted or unsubstituted C1-C3 hydroxyalkyl, or substituted or unsubstituted C1-C3 alkoxy;
r and s are each independently an integer selected from 0 to 5, and at least one of r and s is selected from a positive integer; and
a degree of polymerization n of the aldehyde-ketone polymer is a positive integer selected from 500 to 15000.

Thus, when the aldehyde-ketone polymer of the present application satisfies the above range, it can further reduce molecular chain entanglement, facilitating the diffusion of solvent molecules in the electrolyte between the molecular chains. Additionally, the aldehyde-ketone polymer maintains a certain degree of molecular chain entanglement, capable of effectively storing the electrolyte, and improving the cycling performance of the battery cell.

In some embodiments, a molecular weight of the lyophilic polymer is from 2.0×10⁵ g/mol to 1.2×10⁶ g/mol.

According to a second aspect, the present application provides an electric apparatus including the battery according to the first aspect of the present application.

### BRIEF DESCRIPTION OF DRAWINGS

To more clearly illustrate the technical solutions of the embodiments of the present application, the drawings required for use in the embodiments of the present application are briefly described below. It is apparent that the drawings described below are merely some embodiments of the present application, and those of ordinary skill in the art can obtain other drawings based on these drawings without creative effort.
FIG. 1 is a schematic diagram of an embodiment of a battery cell of the present application.
FIG. 2 is an exploded schematic view of the embodiment of the battery cell shown in FIG. 1.
FIG. 3 is a schematic diagram of an embodiment of a battery module of the present application.
FIG. 4 is a schematic diagram of an embodiment of a battery pack of the present application.
FIG. 5 is an exploded schematic view of the embodiment of the battery pack shown in FIG. 4.
FIG. 6 is a schematic diagram of an embodiment of an electric apparatus including a battery cell of the present application as a power source.

The drawings are not necessarily drawn to actual scale.

### Description of reference signs:

1. battery pack; 2. upper case; 3. lower case; 4. battery module;
5. battery cell; 51. housing; 52. electrode assembly;
53. cover plate; and
6. electric apparatus.

### DESCRIPTION OF EMBODIMENTS

Hereinafter, embodiments specifically disclosing the battery and electric apparatus of the present application are described in detail with appropriate reference to the drawings. However, unnecessary detailed descriptions may be omitted in some cases. For example, detailed descriptions of well-known matters or repetitive descriptions of substantially identical structures may be omitted. This is to avoid unnecessarily verbose descriptions and to facilitate understanding by those skilled in the art. Additionally, the drawings and the following descriptions are provided for those skilled in the art to fully understand the present application and are not intended to limit the subject matter recited in the claims.

The "ranges" disclosed in the present application are defined in the form of lower and upper limits, where a given range is defined by selecting a lower limit and an upper limit, and the selected lower and upper limits define the boundaries of a specific range. Ranges defined in this manner may include or exclude the endpoints and can be arbitrarily combined, meaning any lower limit can be combined with any upper limit to form a range. For example, if ranges of 60 to 120 and 80 to 110 are listed for a specific parameter, it is understood that ranges of 60 to 110 and 80 to 120 are also contemplated. Additionally, if minimum range values of 1 and 2 are listed, and maximum range values of 3, 4, and 5 are listed, the following ranges are all contemplated: 1 to 3, 1 to 4, 1 to 5, 2 to 3, 2 to 4, and 2 to 5. In the present application, unless otherwise specified, the numerical range "a to b" represents an abbreviated representation of any real number combination between a and b, where a and b are both real numbers. For example, the numerical range "0 to 5" means that all real numbers between "0 to 5" have been listed herein, and "0 to 5" is merely an abbreviated representation of these numerical combinations. Additionally, when a parameter is expressed as an integer ≥ 2, it is equivalent to disclosing that the parameter is, for example, the integer 2, 3, 4, 5, 6, 7, 8, 9, 10, 11, 12, and so on.

Unless otherwise specified, all embodiments and optional embodiments of the present application can be combined with each other to form new technical solutions.

Unless otherwise specified, all technical features and optional technical features of the present application can be combined with each other to form new technical solutions.

Unless otherwise specified, all steps of the present application can be performed sequentially or randomly, preferably sequentially. For example, the method includes steps (a) and (b), indicating that the method may include steps (a) and (b) performed sequentially, or steps (b) and (a) performed sequentially. For example, mentioning that the method may further include step (c) indicates that step (c) can be added to the method in any order, for example, the method may include steps (a), (b), and (c), or steps (a), (c), and (b), or steps (c), (a), and (b), and so on.

In the embodiments of the present application, the terms "multiple" and "plurality" refer to two or more.

The term "alkyl" encompasses straight-chain and branched alkyls. For example, an alkyl may be a C1 to C5 alkyl, a C1 to C4 alkyl, a C1 to C3 alkyl, or a C1 to C2 alkyl. In some embodiments, alkyl includes methyl, ethyl, propyl, isopropyl, butyl, isobutyl, and the like. Additionally, an alkyl may be optionally substituted. In case of substitution, the substituent includes a fluorine atom.

The term "alkoxy" refers to a group in which an alkyl is connected to an oxygen atom via a single bond. For example, an alkoxy may be a C1 to C5 alkoxy, a C1 to C3 alkoxy, or a C1 to C2 alkoxy. In some embodiments, alkoxy includes methoxy, ethoxy, propoxy, and the like. Additionally, an alkoxy may be optionally substituted.

The term "halogen atom" refers to a fluorine atom, a chlorine atom, a bromine atom, and the like.

The term "hydrogen" refers to 1H (protium, H), 2H (deuterium, D), or 3H (tritium, T). In various embodiments, "hydrogen" may be 1H (protium, H).

A battery includes an electrode assembly and an electrolyte. The electrode assembly includes a positive electrode plate, a negative electrode plate, and a separator. The positive electrode plate includes a positive electrode film layer containing a positive electrode active material. The positive electrode active material is capable of providing active ions. The negative electrode plate includes a negative electrode film layer containing a negative electrode active material. The separator is disposed between the positive electrode plate and the negative electrode plate, primarily serving to prevent short-circuiting between the positive electrode plate and the negative electrode plate while allowing active ions to pass freely to form a loop. To improve the energy density of the battery, positive electrode active materials and/or negative electrode active materials of high energy density can be selected. Positive electrode active materials and/or negative electrode active materials that can meet the high energy density requirement typically have a high specific capacity.

During the charge-discharge cycling of the battery cell, due to the intercalation or deintercalation of active ions in the active material, the volume of the electrode assembly may change (for example, swelling deformation), causing the electrolyte infiltrated in the electrode assembly to be continuously squeezed out, and making it difficult for the squeezed-out electrolyte to be reabsorbed. This easily leads to a lack of electrolyte in the electrode assembly, resulting in poor wettability of the high-specific-capacity positive electrode active material and/, exacerbating concentration polarization, and deteriorating the cycling performance of the battery.

In view of the above issues, the embodiments of the present application provide a battery cell. The battery cell includes an electrode plate, the electrode plate includes an active material, and the active material is capable of providing a high energy density for the battery cell, for example, ≥ 300 Wh/kg. The electrode plate is provided with a lyophilic polymer. The lyophilic polymer has a high affinity for the electrolyte, capable of enhancing the affinity between the electrode plate and the electrolyte, and storing the electrolyte on the surface of the active material particles of the electrode plate. This improves the electrolyte retention capability of the electrode plate, allowing for good wettability of the electrolyte to the film layer, and can mitigate concentration polarization, improving the cycling performance of the battery.

The technical solutions of the present application are described in detail below.

### Battery cell

According to a first aspect, an embodiment of the present application provides a battery cell.

The battery cell includes an electrode plate, the electrode plate includes a current collector and a film layer disposed on at least one side of the current collector, and the film layer includes an active material and a lyophilic polymer, where an energy density of the battery cell is ≥ 300 Wh/kg.

The electrode plate may include at least one of a positive electrode plate and a negative electrode plate. For example, the electrode plate includes a positive electrode plate, the positive electrode plate including a positive electrode current collector and a positive electrode film layer disposed on at least one side of the positive electrode current collector. The positive electrode film layer includes a positive electrode active material and a lyophilic polymer. For another example, the electrode plate includes a negative electrode plate, the negative electrode plate including a negative electrode current collector and a negative electrode film layer disposed on at least one side of the negative electrode current collector. The negative electrode film layer includes a negative electrode active material and a lyophilic polymer. For another example, the electrode plate includes a positive electrode plate and a negative electrode plate. The positive electrode plate includes a positive electrode current collector and a positive electrode film layer disposed on at least one side of the positive electrode current collector, the positive electrode film layer includes a positive electrode active material and a lyophilic polymer, the negative electrode plate includes a negative electrode current collector and a negative electrode film layer disposed on at least one side of the negative electrode current collector, and the negative electrode film layer includes a negative electrode active material and a lyophilic polymer.

Active materials, such as positive electrode active materials and negative electrode active materials, can both contribute to the energy density of the battery cell, but while achieving high energy density for the battery cell, it is challenging for active materials to maintain the cycling performance of the battery cell. In the embodiments of the present application, the lyophilic polymer is disposed in the film layer of the electrode plate, where the lyophilic polymer can be uniformly mixed with active material particles during slurry preparation to form the film layer. The lyophilic polymer has an affinity for the electrolyte, capable of enhancing the affinity between the electrode plate and the electrolyte. The lyophilic polymer is configured to encapsulate the electrolyte, forming effective electrolyte storage sites on the surface of the active material particles, and improving the electrolyte retention capability of the electrode plate. Enhancement in the wettability of the electrolyte to the film layer can mitigate concentration polarization, improving the cycling performance of the battery.

In the embodiments of the present application, the energy density of the battery cell has a meaning well-known in the art, specifically referring to the weight energy transferred during each charge/discharge cycle, typically expressed in units of Wh/kg. In calculating the energy density, only the mass of the film layer in the electrode plate may be considered, or the mass of the battery cell may be considered. That is, in addition to the mass of the film layer, the mass of other components is considered, where the other components include all components in the battery cell except for the film layer. For example, the other components may include the positive electrode current collector, negative electrode current collector, separator, electrolyte, electrode leads, insulating tape, and aluminum shell. In the embodiments of the present application, the mass of the battery cell is considered in calculating the energy density.

In the embodiments of the present application, the energy density of the battery cell can be tested using devices and methods well-known in the art. For example, after the battery cell is shipped, it is charged at a constant current of 1C to 4.25 V, then charged at a constant voltage to 0.05C, left standing for 30 min, and discharged at 1C to 2.8 V. The discharge capacity D₀ and platform voltage Uo are recorded. The mass of the battery cell M₀ is weighed, and the energy density of the battery cell is D₀ × U₀/M₀.

In the embodiments of the present application, the energy density of the battery cell is high, for example, ≥ 300 Wh/kg, optionally from 300 Wh/kg to 500 Wh/kg, for example, 300 Wh/kg, 305 Wh/kg, 310 Wh/kg, 315 Wh/kg, 320 Wh/kg, 325 Wh/kg, 330 Wh/kg, 335 Wh/kg, 340 Wh/kg, 345 Wh/kg, 350 Wh/kg, 355 Wh/kg, 360 Wh/kg, 365 Wh/kg, 370 Wh/kg, 375 Wh/kg, 380 Wh/kg, 385 Wh/kg, 390 Wh/kg, 395 Wh/kg, 400 Wh/kg, 405 Wh/kg, 410 Wh/kg, 415 Wh/kg, 420 Wh/kg, 425 Wh/kg, 430 Wh/kg, 435 Wh/kg, 440 Wh/kg, 445 Wh/kg, 450 Wh/kg, 455 Wh/kg, 460 Wh/kg, 465 Wh/kg, 470 Wh/kg, 475 Wh/kg, 480 Wh/kg, 485 Wh/kg, 490 Wh/kg, 495 Wh/kg, 500 Wh/kg, or a range composed of any two of the above values.

### [Positive electrode plate]

In some embodiments, the electrode assembly includes a positive electrode plate, the positive electrode plate includes a positive electrode current collector and a positive electrode film layer disposed on at least one side of the positive electrode current collector, and the positive electrode film layer includes a positive electrode active material and a lyophilic polymer. In this case, the negative electrode plate may include a negative electrode current collector and a negative electrode film layer disposed on at least one side of the negative electrode current collector, and the negative electrode film layer includes a negative electrode active material and a lyophilic polymer. Alternatively, the negative electrode plate may include a negative electrode current collector and a negative electrode film layer disposed on at least one side of the negative electrode current collector, and the negative electrode film layer includes a negative electrode active material, that is, including no lyophilic polymer.

In some other embodiments, the electrode assembly includes a negative electrode plate, the negative electrode plate includes a negative electrode current collector and a negative electrode film layer disposed on at least one side of the negative electrode current collector, and the negative electrode film layer includes a negative electrode active material and a lyophilic polymer. In this case, the positive electrode film layer may include a positive electrode active material, that is, including no lyophilic polymer.

Further studies have found that when both the positive electrode film layer and the negative electrode film layer include a lyophilic polymer, the lyophilic polymer can enhance the wettability of the electrolyte to the positive electrode plate and also enhance the wettability of the electrolyte to the negative electrode plate, thereby effectively improving the cycling performance of the battery cell. Specifically, the lyophilic polymer can not only increase the wetting speed of the positive electrode film layer, improve polarization effects and interfacial side reactions of the positive electrode film layer, thereby improving cycle life, but also reduce gas production during storage. The lyophilic polymer can not only increase the wetting speed of the negative electrode film layer, improve polarization effects and interfacial side reactions of the negative electrode film layer, but also buffer the volume swelling of the negative electrode active material to some extent, thereby mitigating cycling swelling and enhancing cycling performance.

In some embodiments, the positive electrode active material includes a compound with a molecular formula LiₓNiₐCo_{b}M_{(1-a-b)}O₂ and its modified compounds, where 0.60 ≤ x ≤ 1.20, 0.85 ≤ a < 1.00, 0 < b ≤ 0.10, a + b < 1.00, and M includes at least one of Mn, Al, B, Zr, Sr, Y, Sb, W, Ti, La, and Nb.

The specific capacity of the above positive electrode active material is relatively high. Especially when 0.90 ≤ a < 1.0, the specific capacity of the positive electrode active material is further improved.

For example, x may be 0.60, 0.62, 0.65, 0.70, 0.72, 0.75, 0.78, 0.80, 0.85, 0.86, 0.87, 0.88, 0.89, 0.90, 0.91, 0.92, 0.93, 0.94, 0.95, 0.96, 0.97, 0.98, 0.99, 1.00, 1.05, 1.10, 1.12, 1.15, 1.18, 1.20, or a range composed of any two of the above values.

For example, a may be 0.85, 0.86, 0.87, 0.88, 0.89, 0.90, 0.91, 0.92, 0.93, 0.94, 0.95, 0.96, 0.97, 0.98, 0.99, or a range composed of any two of the above values.

For example, b may be 0.01, 0.02, 0.03, 0.04, 0.05, 0.06, 0.07, 0.08, 0.09, 0.10, or a range composed of any two of the above values.

For example, a + b may be 0.86, 0.87, 0.88, 0.89, 0.90, 0.91, 0.92, 0.93, 0.94, 0.95, 0.96, 0.97, 0.98, 0.99, or a range composed of any two of the above values.

For example, the positive electrode active material includes at least one of compounds with molecular formulas LiNi_{0.85}Co_{0.10}Mo_{0.05}O₂, LiNi_{0.92}Co_{0.04}M_{0.04}O₂, LiNi_{0.92}Co_{0.05}M_{0.03}O₂, LiNi_{0.92}Co_{0.06}Mo_{0.02}O₂, LiNi_{0.93}Co_{0.03}M_{0.04}O₂, and LiNi_{0.93}Co_{0.025}M_{0.045}O₂.

During the charge-discharge process of the battery cell, active ions such as Li undergo intercalation, deintercalation, and consumption, and the molar content of Li varies when the battery cell is discharged to different states. In the embodiments of the present application, regarding the listing of positive electrode active materials, the molar content of Li refers to the initial state of the material, that is, the state before feeding, and the molar content of Li may change after charge-discharge cycles when the positive electrode active material is applied to a battery system.

In the embodiments of the present application, regarding the listing of positive electrode active materials, the molar content of oxygen O is only a theoretical value, and lattice oxygen release may cause changes in the molar content of oxygen O, resulting in actual fluctuations in the molar content of oxygen O.

In the embodiments of the present application, modified compounds may be modified by doping or coating. Doping modification may involve adding doping elements such as transition metals to the compound, and coating modification may involve surface coating with materials such as carbon, that is, forming a carbon coating layer on the outer surface of particles.

In some embodiments, the positive electrode active material may include single crystal particles and polycrystalline particles.

A crystal is a solid composed of atoms or atomic groups arranged regularly in three-dimensional space, with single crystal particles having the same atomic arrangement orientation throughout the entire crystal, and polycrystalline particles consisting of multiple single crystals with different orientations. Single crystal particles can improve the compacted density of the positive electrode plate, while polycrystalline particles can enable the positive electrode plate to exhibit superior power performance, and adding both single crystal particles and polycrystalline particles can allow the positive electrode plate to balance compacted density and power performance.

In some embodiments, a volume-based median particle size Dᵥ50 of the single crystal particles is smaller than a volume-based median particle size Dᵥ50 of the polycrystalline particles. The cooperation of different particle sizes of single crystal particles and polycrystalline particles can enhance the compacted density of the positive electrode film layer, helping to further improve the energy density of the battery cell.

In some embodiments, the volume-based median particle size Dᵥ50 of the single crystal particles is from 2 µm to 5 µm, for example, 2 µm, 2.5 µm, 3 µm, 3.5 µm, 4 µm, 4.5 µm, 5 µm, or a range composed of any two of the above values.

In some embodiments, the volume-based median particle size Dᵥ50 of the polycrystalline particles is from 5 µm to 10 µm, for example, 5 µm, 5.5 µm, 6 µm, 6.5 µm, 7 µm, 7.5 µm, 8 µm, 8.5 µm, 9 µm, 9.5 µm, 10 µm, or a range composed of any two of the above values.

In the embodiments of the present application, the volume-based median particle size Dᵥ50 of particles has a meaning well-known in the art. The volume-based median particle size Dᵥ50 of particles refers to the particle size corresponding to 50% of the volume distribution, which can be tested using devices and methods well-known in the art. The positive electrode plate is disassembled from a fully discharged fresh battery cell with a 0% state of charge SOC, and the positive electrode current collector is removed, retaining the positive electrode film layer. The positive electrode film layer is soaked in N-methylpyrrolidone NMP to wash out the binder in the positive electrode film layer, retaining the positive electrode active material, and the positive electrode active material is dried and tested for the volume-based median particle size Dᵥ50 by using a Mastersizer 2000E laser particle size analyzer in accordance with the test standard GB/T 19077-2016. In the embodiments of the present application, the fresh battery cell may be a battery cell just manufactured (having been subjected to formation but not charge-discharge cycle) or a battery cell assembled in an electric apparatus subjected to fewer than 10 charge-discharge cycles.

In some embodiments, based on a total mass of the positive electrode active material, a mass content of the single crystal particles is from 10% to 30%. The single crystal particles having a mass content within the above range can further cooperate with the polycrystalline particles to enhance the compacted density of the positive electrode film layer, thereby improving the energy density of the battery cell. For example, the mass content of the single crystal particles may be 10%, 11%, 12%, 13%, 14%, 15%, 16%, 17%, 18%, 19%, 20%, 21%, 22%, 23%, 24%, 25%, 26%, 27%, 28%, 29%, 30%, or a range composed of any two of the above values.

In some embodiments, based on the total mass of the positive electrode active material, the mass content of the polycrystalline particles is from 70% to 90%. The polycrystalline particles having a mass content within the above range can further cooperate with the single crystal particles to enhance the compacted density of the positive electrode film layer, thereby improving the energy density of the battery cell. For example, the mass content of the polycrystalline particles may be 70%, 71%, 72%, 73%, 74%, 75%, 76%, 77%, 78%, 79%, 80%, 81%, 82%, 83%, 84%, 85%, 86%, 87%, 88%, 89%, 90%, or a range composed of any two of the above values.

The mass content of single crystal particles and the mass content of polycrystalline particles can be observed by using a scanning electron microscope SEM, and quantitatively analyzing the distribution ratio of single crystal particles and polycrystalline particles to obtain the mass content of each particle type.

In some embodiments, a compacted density of a positive electrode film layer is ≥ 3.6 g/cm³, optionally from 3.6 g/cm³ to 3.8 g/cm³, for example, 3.6 g/cm³, 3.61 g/cm³, 3.62 g/cm³, 3.65 g/cm³, 3.68 g/cm³, 3.70 g/cm³, 3.72 g/cm³, 3.75 g/cm³, 3.78 g/cm³, 3.80 g/cm³, or a range composed of any two of the above values. When the compacted density of the positive electrode film layer is within the above range, it can significantly enhance the energy density of the battery cell.

In the embodiments of the present application, the compacted density of the positive electrode film layer has a meaning well-known in the art and can be tested using devices and methods well-known in the art. For example, a positive electrode plate subjected to one-surface coating and cold pressing is taken (if it is a plate subjected to two-surface coating, one surface of the positive electrode film layer can be wiped off first), punched into a small disc with an area of S1, and weighed. The weight is recorded as M1. The thickness is measured as H1. Then, the positive electrode film layer of the weighed positive electrode plate is wiped off, the weight of the positive electrode current collector is weighed and recorded as M0, and the thickness is measured as H0. Areal density of positive electrode film layer = (weight of positive electrode plate M1 - weight of positive electrode current collector M0)/S1, thickness of positive electrode film layer = thickness of positive electrode plate H1 - thickness of positive electrode current collector H0, and compacted density of positive electrode film layer = areal density of positive electrode film layer/thickness of positive electrode film layer.

In some embodiments, based on the total mass of the positive electrode film layer, the mass content of the positive electrode active material is from 80% to 99.9%, optionally from 92% to 99%. When the mass content of the positive electrode active material is within the above range, it is conducive to enhancing the energy density of the battery cell.

In some embodiments, based on the total mass of the positive electrode film layer, the mass content of the lyophilic polymer is ≤ 5%; optionally, from 0.05% to 5%. When the mass content of the lyophilic polymer is within the above range, the lyophilic polymer can form multiple electrolyte storage sites on the surface of the positive electrode active material particles, improving the electrolyte retention capability of the positive electrode film layer, and enhancing the wettability of the electrolyte to the positive electrode active material in the positive electrode film layer, thereby helping to improve the cycling performance of the battery cell.

For example, the mass content of the lyophilic polymer may be 0.05%, 0.08%, 0.10%, 0.11%, 0.12%, 0.15%, 0.16%, 0.18%, 0.20%, 0.22%, 0.25%, 0.28%, 0.30%, 0.32%, 0.35%, 0.38%, 0.40%, 0.42%, 0.45%, 0.48%, 0.50%, 0.55%, 0.58%, 0.60%, 0.70%, 0.80%, 0.90%, 0.95%, 1%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.1%, 3.2%, 3.3%, 3.4%, 3.5%, 3.6%, 3.7%, 3.8%, 3.9%, 4.0%, 4.1%, 4.2%, 4.3%, 4.4%, 4.5%, 4.6%, 4.7%, 4.8%, 4.9%, 5.0%, or a range composed of any two of the above values.

In some embodiments, the coating weight of the lyophilic polymer is from 0.5 mg/1540.25 mm² to 5 mg/1540.25 mm², for example, 0.5 mg/1540.25 mm², 0.6 mg/1540.25 mm², 0.7 mg/1540.25 mm², 0.8 mg/1540.25 mm², 0.9 mg/1540.25 mm², 1.0 mg/1540.25 mm², 1.1 mg/1540.25 mm², 1.2 mg/1540.25 mm², 1.3 mg/1540.25 mm², 1.4 mg/1540.25 mm², 1.5 mg/1540.25 mm², 1.6 mg/1540.25 mm², 1.7 mg/1540.25 mm², 1.8 mg/1540.25 mm², 1.9 mg/1540.25 mm², 2.0 mg/1540.25 mm², 2.1 mg/1540.25 mm², 2.2 mg/1540.25 mm², 2.3 mg/1540.25 mm², 2.4 mg/1540.25 mm², 2.5 mg/1540.25 mm², 2.6 mg/1540.25 mm², 2.7 mg/1540.25 mm², 2.8 mg/1540.25 mm², 2.9 mg/1540.25 mm², 3.0 mg/1540.25 mm², 3.1 mg/1540.25 mm², 3.2 mg/1540.25 mm², 3.3 mg/1540.25 mm², 3.4 mg/1540.25 mm², 3.5 mg/1540.25 mm², 3.6 mg/1540.25 mm², 3.7 mg/1540.25 mm², 3.8 mg/1540.25 mm², 3.9 mg/1540.25 mm², 4.0 mg/1540.25 mm², 4.1 mg/1540.25 mm², 4.2 mg/1540.25 mm², 4.3 mg/1540.25 mm², 4.4 mg/1540.25 mm², 4.5 mg/1540.25 mm², 4.6 mg/1540.25 mm², 4.7 mg/1540.25 mm², 4.8 mg/1540.25 mm², 4.9 mg/1540.25 mm², 5.0 mg/1540.25 mm², or a range composed of any two of the above values. The coating weight of the lyophilic polymer is the coating weight in the positive electrode film layer on one side of the positive electrode plate.

In the embodiments of the present application, the mass content of the polymer has a meaning well-known in the art and can be tested using device and methods well-known in the art. For example, it can be tested using thermogravimetric analysis TGA in accordance with JY/T014-1996. Specifically, based on the mass loss of the plate during the heating process, a mass-temperature curve, that is, a TG curve, is drawn, and the mass loss corresponding to the polymer decomposition temperature is read as the total mass of the polymer in the plate so as to calculate the mass content and coating weight of the polymer. During the test, testing is performed in a nitrogen atmosphere by the following heating process: heating from RT to 500°C at 5°C/min; heating from 500°C to 600°C at 10°C/min; and maintaining the temperature at 600°C for 10 min; and ending.

In some embodiments, the lyophilic polymer may include at least one of a fluorinated polymer, an ether polymer, an ester polymer, and an aldehyde-ketone polymer. The lyophilic polymer is configured to encapsulate the electrolyte on the surface of the active material, forming effective electrolyte storage sites on the surface of the active material, and enhancing the electrolyte retention capability of the electrode plate. The specific types of lyophilic polymers are described below.

### [Fluorinated polymer]

In some embodiments, the lyophilic polymer may include a fluorinated polymer.

In some embodiments, the fluorinated polymer has a crystallinity measured by differential scanning calorimetry and denoted as X_{c1}%, where 0 < X_{c1} ≤ 28.

In some embodiments, a melting temperature of the fluorinated polymer is Tₘ₁°C, where 0 < Tₘ₁ ≤ 130.

In some embodiments, a glass transition temperature of the fluorinated polymer is T_{g1}°C, where -30 < T_{g1} ≤ 40.

Crystallization refers to the process in which atoms, ions, or molecules in a material are arranged in a certain spatial order to form an ordered structure. The conformation of the lyophilic polymer during crystallization is determined by both intramolecular and intermolecular factors, with intermolecular forces affecting the packing density between molecular chains. The crystallinity X_{c1} is used to characterize the degree of crystallization in a material, and can be measured using differential scanning calorimetry DSC. Specifically, the test procedure is as follows: take a sample of 0.5 g to 0.8 g, place the sample in a sample crucible, and subject it to heating and cooling in a nitrogen atmosphere at a heating rate of 10°C/min from an initial temperature 20°C below the material's intrinsic T_{g1}°C to a final temperature 20°C above the material's intrinsic Tₘ₁°C, and determine the actual glass transition temperature T_{g1}°C, melting temperature Tₘ₁°C, and the like of the material based on the exothermic or endothermic peaks or transition points during the process.

Thus, the fluorinated polymer has a relatively low crystallinity, melting temperature, or glass transition temperature. The fluorinated polymer has certain mobility above the glass transition temperature, and therefore can buffer external energy through chain segment motion under external force, exhibiting certain flexibility, and capable of acting as a buffer for the charge-discharge process of the positive electrode active material or negative electrode active material during battery cell cycling, thereby mitigating cycling swelling and enhancing cycling performance.

For example, the crystallinity of the fluorinated polymer measured by differential scanning calorimetry may be 5%, 10%, 15%, 20%, 25%, 28%, or a range composed of any two of the above values.

For example, the melting temperature of the fluorinated polymer may be 10°C, 20°C, 50°C, 70°C, 90°C, 100°C, 120°C, 130°C, or a range composed of any two of the above values.

For example, the glass transition temperature of the fluorinated polymer may be -30°C, -25°C, -20°C, -15°C, - 10°C, -5°C, 0°C, 5°C, 10°C, 15°C, 20°C, 25°C, 30°C, 35°C, 40°C, or a range composed of any two of the above values.

In some embodiments, the fluorinated polymer includes at least one of a compound represented by formula (AI) to a compound represented by formula (All): 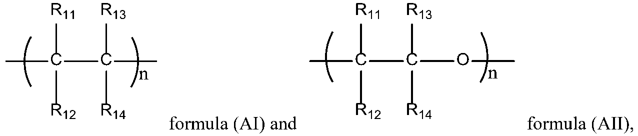 where in formula (AI) and formula (AII), R₁₁, R₁₂, R₁₃, and R₁₄ each independently include a hydrogen atom, a fluorine atom, a chlorine atom, substituted or unsubstituted alkyl, or substituted or unsubstituted alkoxy, and at least one of R₁₁, R₁₂, R₁₃, and R₁₄ includes a fluorine atom.

Optionally, R₁₁, R₁₂, R₁₃, and R₁₄ each independently include a hydrogen atom, a fluorine atom, a chlorine atom, substituted or unsubstituted C1-C10 alkyl, or substituted or unsubstituted C1-C10 alkoxy.

Optionally, R₁₁, R₁₂, R₁₃, and R₁₄ each independently include a hydrogen atom, a fluorine atom, a chlorine atom, substituted or unsubstituted C1-C3 alkyl, or substituted or unsubstituted C1-C3 alkoxy.

Further optionally, R₁₁, R₁₂, R₁₃, and R₁₄ each independently include a hydrogen atom, a fluorine atom, a chlorine atom, methyl, fluoromethyl, methoxy, or perfluoromethoxy.

In some embodiments, the degree of polymerization n of the fluorinated polymer is a positive integer selected from 1000 to 30000, for example, 1000, 2000, 3000, 4000, 5000, 6000, 7000, 8000, 9000, 10000, 11000, 12000, 13000, 14000, 15000, 16000, 17000, 18000, 19000, 20000, 21000, 22000, 23000, 24000, 25000, 26000, 27000, 28000, 29000, or a range composed of any two of the above values.

Optionally, in case of substitution, the substituent may include one or more of a cyano group (-CN), a nitro group, a sulfonic acid group, a sulfonyl group, an amide, a carboxyl group, an ester group, or a halogen atom. The halogen atom may include a fluorine atom, a bromine atom, or the like, optionally a fluorine atom.

In some embodiments, the fluorinated polymer includes at least one of a compound represented by formula (AIII): 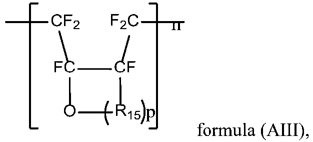 where in formula (AIII), R₁₅ includes a single bond or substituted or unsubstituted alkyl, and in case of substitution, the substituent includes a fluorine atom.

In some embodiments, in case of substitution, the substituent may include one or more of a cyano group (-CN), a nitro group, a sulfonic acid group, a sulfonyl group, an amide, a carboxyl group, an ester group, or a halogen atom.

Optionally, R₁₅ includes a single bond or substituted or unsubstituted C1-C3 alkyl.

In some embodiments, p is a positive integer selected from 1 to 3, for example, 1, 2, or 3.

In some embodiments, the degree of polymerization n of the fluorinated polymer is a positive integer selected from 1000 to 30000, for example, 1000, 2000, 3000, 4000, 5000, 6000, 7000, 8000, 9000, 10000, 11000, 12000, 13000, 14000, 15000, 16000, 17000, 18000, 19000, 20000, 21000, 22000, 23000, 24000, 25000, 26000, 27000, 28000, 29000, or a range composed of any two of the above values.

In some embodiments, the fluorinated polymer includes at least one of a compound represented by formula (AI-1) to a compound represented by formula (AI-11): 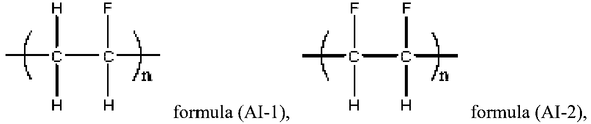 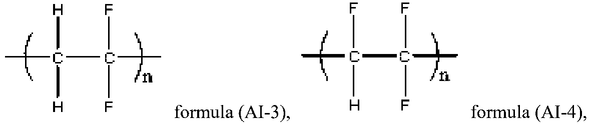 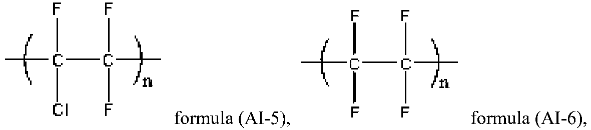 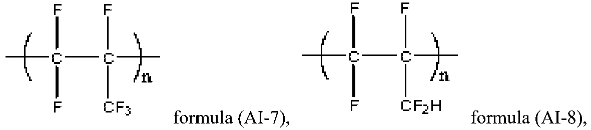 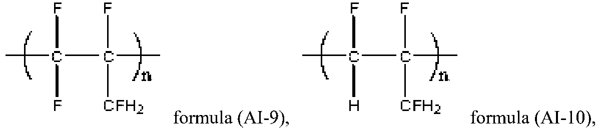 and

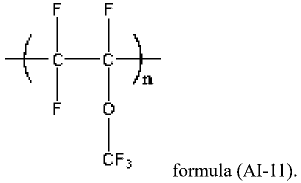

In some embodiments, the fluorinated polymer includes at least one of a compound represented by formula (AII-1) to a compound represented by formula (AII-5): 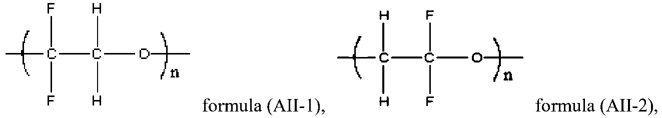 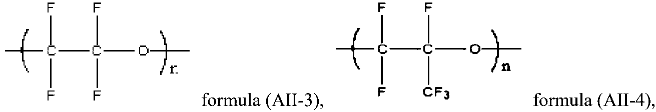 and

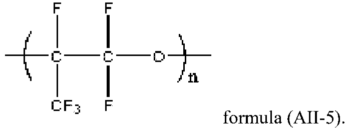

In some embodiments, the fluorinated polymer includes at least one of a compound represented by formula (AIII-1) to a compound represented by formula (AIII-3): 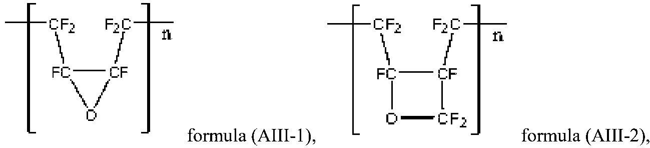 and

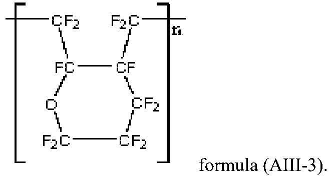

For example, the fluorinated polymer includes one or more of polytetrafluoroethylene PTFE, polyvinylidene fluoride PVDF, fluorinated ethylene propylene copolymer FEP, perfluoroalkoxy polymer PFA, perfluoropolyether PFPE, polyvinylidene fluoride-hexafluoropropylene copolymer PVDF-HFP, polyvinylidene fluoride-trifluoroethylene copolymer PVDF-TrFE, and perfluoro(1-butenyl vinyl ether) polymer (perfluoro(1-butenyl vinyl ether) polymer, CYTOP for short).

Optionally, the fluorinated polymer includes one or more of polytetrafluoroethylene PTFE, polyvinylidene fluoride PVDF, fluorinated ethylene propylene copolymer FEP, polyvinylidene fluoride-hexafluoropropylene copolymer PVDF-HFP, and polyvinylidene fluoride-trifluoroethylene copolymer PVDF-TrFE.

The above fluorinated polymers may be derived from one or more of the following monomers: fluorinated ethylene, vinyl fluoride, 1,2-difluoroethylene, vinylidene fluoride, trifluoroethylene, chlorotrifluoroethylene, tetrafluoroethylene, hexafluoropropylene, 3,3,3-trifluoropropylene, trifluoropropylene, tetrafluoropropylene, and pentafluoropropylene. Optionally, the above fluorinated polymers may be derived from at least two of the following monomers: fluorinated ethylene, vinyl fluoride, 1,2-difluoroethylene, vinylidene fluoride, trifluoroethylene, chlorotrifluoroethylene, tetrafluoroethylene, hexafluoropropylene, 3,3,3-trifluoropropylene, trifluoropropylene, tetrafluoropropylene, and pentafluoropropylene.

In the embodiments of the present application, the polymer may also be obtained by copolymerizing the above structural groups with a small amount of other types of structural groups (compounds such as olefin compounds, ester monomers, nitrile monomers such as acrylonitrile, amide monomers such as acrylamide, or compounds such as acrylic acid). These small amounts of monomers have relatively poor lyophilic properties, and copolymerizing the monomers of the above fluorinated polymers with these monomers can improve the swelling rate and compressive modulus of the lyophilic polymer.

In some embodiments, the molecular weight of the lyophilic polymer is from 2×10⁵ g/mol to 1.2×10⁶ g/mol.

For example, the molecular weight of the lyophilic polymer may be 2×10⁵ g/mol, 5×10⁵ g/mol, 8×10⁵ g/mol, 1×10⁶ g/mol, 1.2×10⁶ g/mol, or a range composed of any two of the above values.

### [Ether polymer]

In some embodiments, the lyophilic polymer includes an ether polymer.

In some embodiments, the ether polymer is made into a sheet-like structure, a storage modulus G' - loss modulus G" curve of the sheet-like structure is obtained by subjecting it to dynamic frequency sweep testing at (Tₘ₂ + 20)°C, and a slope of the storage modulus G' - loss modulus G" curve is K₁, where 1 < K₁ < ∞, and Tₘ₂°C represents a melting temperature of the ether polymer.

Specifically, the preparation process of the sheet-like structure is as follows: the ether polymer is vacuum-dried at 80°C for 12 h. The dried ether polymer is hot-pressed into a thin sheet using a flat vulcanizing machine, with the hot-pressing temperature set to (Tₘ₂ + 20)°C, the calendering thickness set to 1-2 min, the calendering time set to 2 min, and the pressure set to 8 MPa. After calendering for 2 min, the sample is taken out and placed on another vulcanizing machine of the same model for cold pressing, with the cold-pressing pressure set to 10 MPa. A polymer disc (sheet-like structure) of a fixed size can be obtained by using a circular mold with a diameter of 25 mm. For example, the sheet-like structure may be a disc with a thickness of 1-2 mm and a diameter of 25 mm, or can be prepared according to the sample standards required by the testing device.

According to the conclusions of classical linear viscoelasticity, for polymers, especially linear polymers, in the terminal region of the storage modulus G' - loss modulus G" curve (the range approaching the maximum angular velocity), the storage modulus G' - loss modulus G" exhibits frequency dependence, and the longest chain of the polymer plays a role in viscoelastic behavior.

The specific steps of the dynamic frequency sweep test are as follows: a TA-AR2000EX rotational rheometer (TA Instruments, USA) is used for dynamic frequency sweep testing, with a parallel plate diameter of 25 mm and a thickness of 0.9 mm. To ensure testing in the linear viscoelastic region, the strain during the dynamic frequency sweep test is 2%, the test temperature is Tₘ₂ + 20°C, and the frequency sweep range is: 500 rad/s ≤ w² ≤ 0.05 rad/s, to obtain data in the low-frequency region as much as possible.

The dynamic frequency sweep test can characterize the degree of molecular chain entanglement in the solid-phase melt (melt state). As compared with linear structures or short-branched structures, long-branched structures, network structures, and low-crosslinked structures have a high degree of entanglement, exhibiting deviation from linear terminal behavior, and the ether polymer exhibits solid-phase behavior. When the ether polymer of the present application satisfies the above range, it can further reduce molecular chain entanglement, facilitating the diffusion of solvent molecules in the electrolyte between the molecular chains. Additionally, the ether polymer maintains a certain degree of molecular chain entanglement, capable of effectively storing the electrolyte, and improving the cycling performance of the battery cell.

In some embodiments, 1 < K₁ ≤ 100, optionally, 1 < K₁ ≤ 10. For example, K₁ may be 1.01, 1.1, 2, 5, 10, 15, 20, 30, 50, 100, 200, 500, 1000, 5000, 10000, or a range composed of any two of the above values.

In some embodiments, a glass transition temperature of the ether polymer is T_{g2}°C, -20 < T_{g2} < 35. For example, the glass transition temperature of the ether polymer may be -20°C, -15°C, -10°C, -5°C, -0°C, 5°C, 10°C, 15°C, 20°C, 25°C, 30°C, 35°C, or a range composed of any two of the above values. The ether polymer has certain mobility above the glass transition temperature, and therefore can buffer external energy through chain segment motion under external force, exhibiting certain flexibility, and capable of acting as a buffer for the charge-discharge process of the positive electrode active material or negative electrode active material during battery cell cycling, thereby mitigating cycling swelling and enhancing cycling performance.

In some embodiments, the ether polymer includes a compound represented by formula (BI): 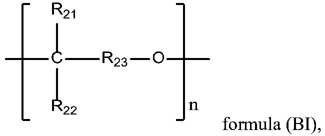 where in formula (BI), R₂₁ and R₂₂ each independently include a hydrogen atom, substituted or unsubstituted alkyl, or substituted or unsubstituted alkoxy, and R₂₃ includes a single bond or substituted or unsubstituted methylene.

Optionally, R₂₁ and R₂₂ each independently include a hydrogen atom, substituted or unsubstituted C1-C10 alkyl, or substituted or unsubstituted C1-C10 alkoxy.

Optionally, R₂₁ and R₂₂ each independently include a hydrogen atom, substituted or unsubstituted C1-C3 alkyl, or substituted or unsubstituted C1-C3 alkoxy.

Optionally, R₂₃ includes a single bond or substituted or unsubstituted C1-C10 methylene.

Optionally, R₂₃ includes a single bond or substituted or unsubstituted C1-C5 methylene.

For example, the ether polymer includes at least one of a compound represented by formula (BI-1) to a compound represented by formula (BI-8):

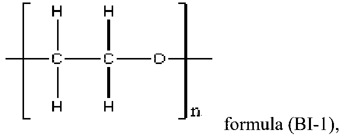

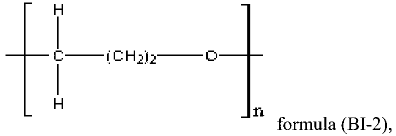

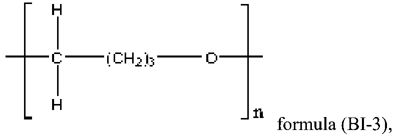

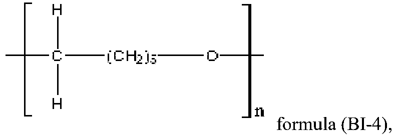

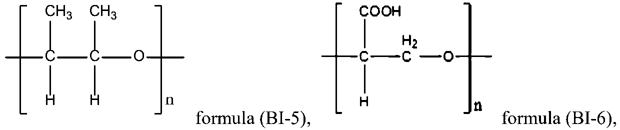

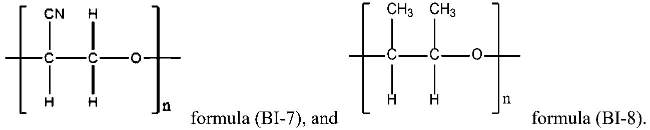

In some embodiments, the ether polymer includes a compound represented by formula (BII): 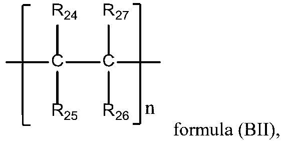 where in formula (BII), R₂₄ to R₂₇ each independently include a hydrogen atom, substituted or unsubstituted alkyl, substituted or unsubstituted alkoxy, or an ether group, and at least one of R₂₄ to R₂₇ includes substituted or unsubstituted alkoxy or an ether group.

Optionally, R₂₄ to R₂₇ each independently include a hydrogen atom, substituted or unsubstituted C1-C10 alkyl, substituted or unsubstituted C1-C10 alkoxy, or an ether group.

Optionally, R₂₄ to R₂₇ each independently include a hydrogen atom, substituted or unsubstituted C1-C3 alkyl, substituted or unsubstituted C1-C3 alkoxy, or an ether group.

In some embodiments, the ether polymer includes at least one of a compound represented by formula (BII-1) to a compound represented by formula (BII-7): 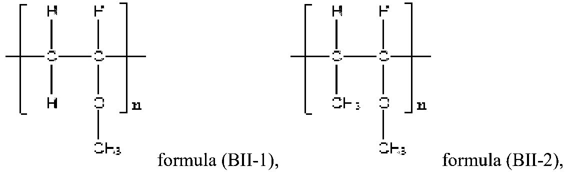 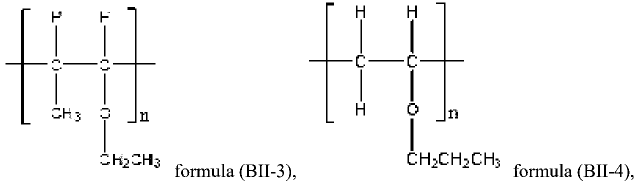 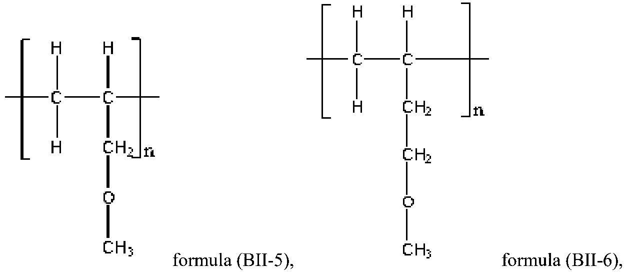 and

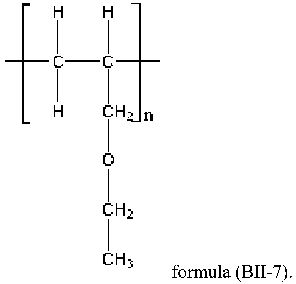

The above polymers are only examples of the structural groups of the main molecular chain. In the embodiments of the present application, the polymer may also be obtained by copolymerizing the above structural groups with a small amount of other types of structural groups (compounds such as olefin compounds, ester monomers, nitrile monomers such as acrylonitrile, amide monomers such as acrylamide, or compounds such as acrylic acid).

When the above groups are substituted, the substituent may include one or more of a cyano group (-CN), a nitro group, a sulfonic acid group, a sulfonyl group, an amide, a carboxyl group, an ester group, or a halogen atom. The halogen atom may include at least one of a fluorine atom or a bromine atom; optionally, a fluorine atom.

In some embodiments, the degree of polymerization n of the ether polymer is a positive integer selected from 1500 to 25000, for example, 1500, 2000, 3000, 4000, 5000, 6000, 7000, 8000, 9000, 10000, 11000, 12000, 13000, 14000, 15000, 16000, 17000, 18000, 19000, 20000, 21000, 22000, 23000, 24000, 25000, or a range composed of any two of the above values.

Optionally, the degree of polymerization n of the ether polymer is a positive integer selected from 3000 to 18000.

In some embodiments, the molecular weight of the lyophilic polymer is from 2.0×10⁵ g/mol to 1.2×10⁶ g/mol. For example, the molecular weight of the polymer may be 2×10⁵ g/mol, 5×10⁵ g/mol, 8×10⁵ g/mol, 1×10⁶ g/mol, 1.2×10⁶ g/mol, or a range composed of any two of the above values.

### [Ester polymer]

In some embodiments, the lyophilic polymer includes an ester polymer.

In some embodiments, the ester polymer is made into a sheet-like structure; a storage modulus G' - loss modulus G" curve of the sheet-like structure is obtained by subjecting it to dynamic frequency sweep testing at (Tₘ₃ + 20)°C, and a slope of the storage modulus G' - loss modulus G" curve is K₂, where 1 < K₁ < ∞, and Tₘ₃°C represents a melting temperature of the ester polymer.

Specifically, the preparation process of the sheet-like structure is the same as that for the ether polymer and is not repeated here. When the ester polymer of the present application satisfies the above range, it can further reduce molecular chain entanglement, facilitating the diffusion of solvent molecules in the electrolyte between the molecular chains. Additionally, the ester polymer maintains a certain degree of molecular chain entanglement, capable of effectively storing the electrolyte, and improving the cycling performance of the battery cell.

In some embodiments, 1 < K₂ ≤ 100, optionally, 1 < K₂ ≤ 10. For example, K₂ may be 1.01, 1.1, 2, 5, 10, 15, 20, 30, 50, 100, 200, 500, 1000, 5000, 10000, or a range composed of any two of the above values.

In some embodiments, a glass transition temperature of the ester polymer is T_{g3}°C, where -20 ≤ T_{g3} ≤ 35. For example, the glass transition temperature of the ester polymer may be -20°C, -15°C, -10°C, -5°C, -0°C, 5°C, 10°C, 15°C, 20°C, 25°C, 30°C, 35°C, or a range composed of any two of the above values. The ester polymer has certain mobility above the glass transition temperature, and therefore can buffer external energy through chain segment motion under external force, exhibiting certain flexibility, and capable of acting as a buffer for the charge-discharge process of the positive electrode active material or negative electrode active material during battery cell cycling, thereby mitigating cycling swelling and enhancing cycling performance.

In some embodiments, the ester polymer includes a compound represented by formula (CI): 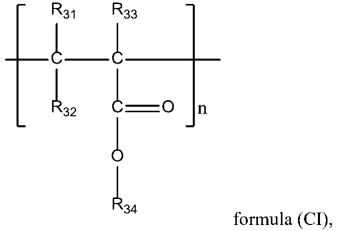 where in formula (CI), R₃₁, R₃₂, and R₃₃ each independently include a hydrogen atom or substituted or unsubstituted alkyl; and R₃₄ includes substituted or unsubstituted alkyl or substituted or unsubstituted hydroxyalkyl.

Optionally, R₃₁, R₃₂, and R₃₃ each independently include a hydrogen atom or substituted or unsubstituted C1-C10 alkyl.

Optionally, R₃₁, R₃₂, and R₃₃ each independently include a hydrogen atom or substituted or unsubstituted C1-C8 alkyl.

In some embodiments, R₃₄ includes substituted or unsubstituted C1-C10 alkyl or substituted or unsubstituted C1-C10 hydroxyalkyl.

In some embodiments, R₃₄ includes substituted or unsubstituted C1-C8 alkyl or substituted or unsubstituted C1-C8 hydroxyalkyl.

In some embodiments, R₃₁ includes a hydrogen atom or substituted or unsubstituted methyl.

In some embodiments, R₃₂ and R₃₃ each independently include a hydrogen atom.

For example, the ester polymer includes at least one of a compound represented by formula (CI-1) to a compound represented by formula (CI-15):

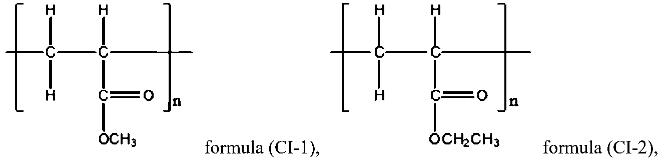

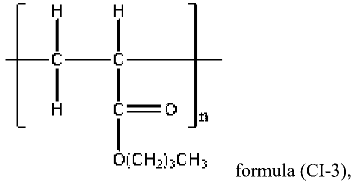

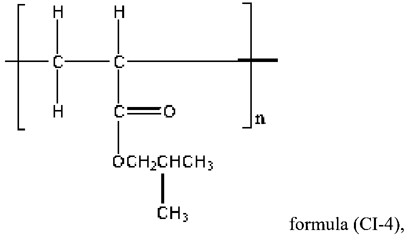

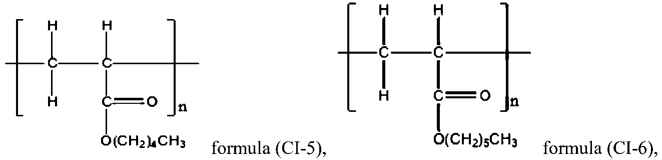

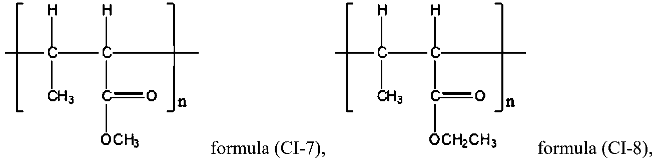

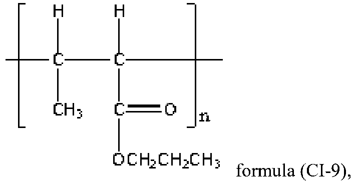

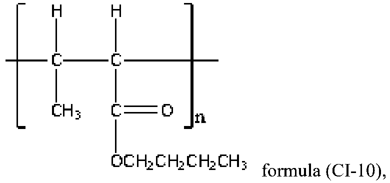

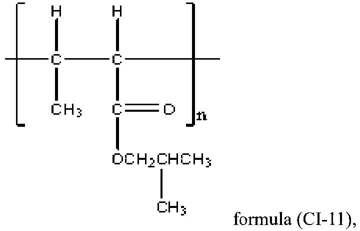

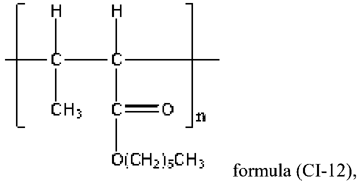

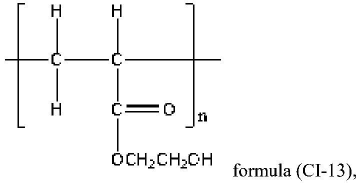

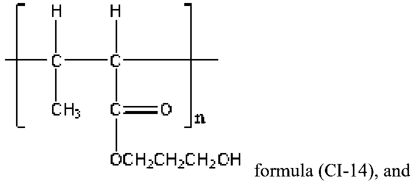

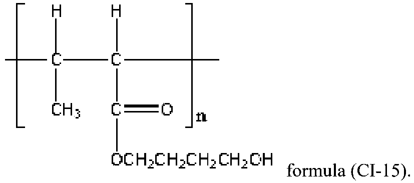

In some embodiments, the ester polymer includes a compound represented by formula (CII): 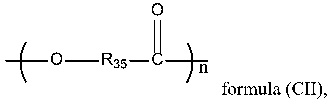 where in formula (CII), R₃₅ includes substituted or unsubstituted methylene.

Optionally, R₃₅ includes substituted or unsubstituted C1-C10 methylene.

Optionally, R₃₅ includes substituted or unsubstituted C2-C6 methylene.

Optionally, R₃₅ includes substituted or unsubstituted C2-C4 methylene.

For example, the ester polymer includes at least one of a compound represented by formula (CII-1) to a compound represented by formula (CII-5): 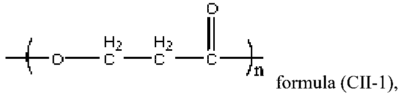 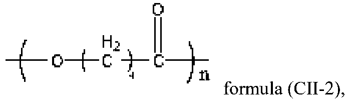 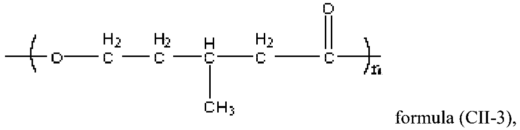 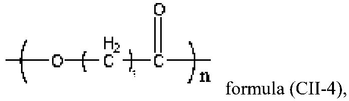 and

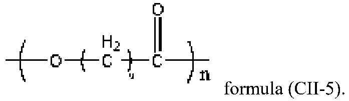

In some embodiments, the ester polymer includes a compound represented by formula (CIII): 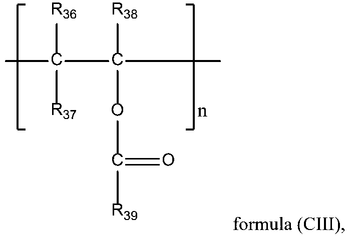
where in formula (CIII), R₃₆, R₃₇, and R₃₈ each independently include a hydrogen atom or substituted or unsubstituted C1-C8 alkyl; and R₃₉ includes substituted or unsubstituted C1-C8 alkyl; and
optionally, R₃₆, R₃₇, and R₃₈ each independently include a hydrogen atom or substituted or unsubstituted C1-C4 alkyl.

For example, the ester polymer includes at least one of a compound represented by formula (CIII-1) to a compound represented by formula (CIII-5): 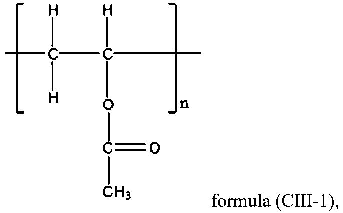 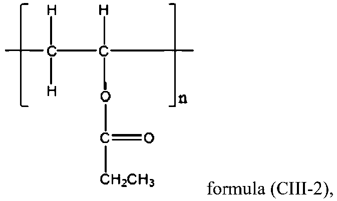 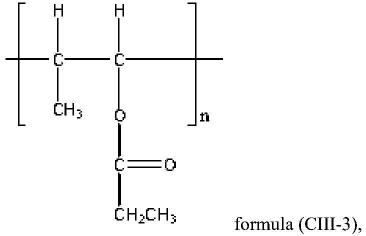 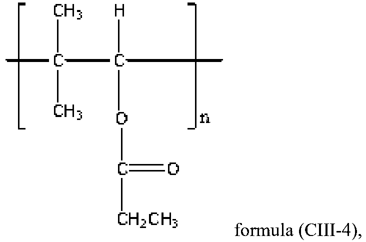 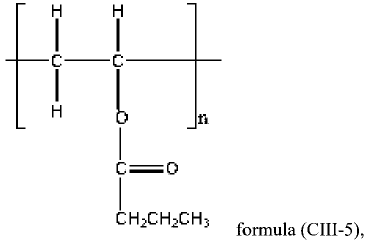 and

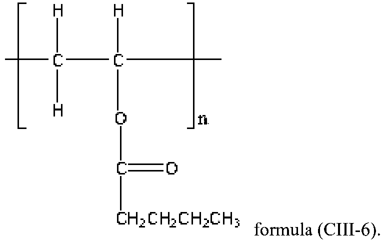

The above polymers are only examples of the structural groups of the main molecular chain. In the embodiments of the present application, the lyophilic polymer may also be obtained by copolymerizing the above structural groups with a small amount of other types of structural groups (compounds such as olefin compounds, ester monomers, nitrile monomers such as acrylonitrile, amide monomers such as acrylamide, or compounds such as acrylic acid).

When the above groups are substituted, the substituent may include one or more of a cyano group (-CN), a nitro group, a sulfonic acid group, a sulfonyl group, an amide, a carboxyl group, an ester group, or a halogen atom.

In some embodiments, the degree of polymerization n of the ester polymer is a positive integer selected from 800 to 20000, for example, 800, 1000, 1500, 2000, 3000, 4000, 5000, 6000, 7000, 8000, 9000, 10000, 11000, 12000, 13000, 14000, 15000, 16000, 17000, 18000, 19000, 20000, or a range composed of any two of the above values.

In some embodiments, the degree of polymerization n of the ester polymer is a positive integer selected from 1000 to 15000.

In some embodiments, the molecular weight of the lyophilic polymer is from 2×10⁵ g/mol to 1.2×10⁶ g/mol.

For example, the molecular weight of the lyophilic polymer may be 2×10⁵ g/mol, 5×10⁵ g/mol, 8×10⁵ g/mol, 1×10⁶ g/mol, 1.2×10⁶ g/mol, or a range composed of any two of the above values.

### [Aldehyde-ketone polymer]

In some embodiments, the lyophilic polymer includes an aldehyde-ketone polymer.

In some embodiments, the aldehyde-ketone polymer is made into a sheet-like structure, a storage modulus G' - loss modulus G" curve of the sheet-like structure is obtained by subjecting it to dynamic frequency sweep testing at (Tₘ₄ + 20)°C, and a slope of the storage modulus G' - loss modulus G" curve is K₃, where 0.8 < K₃ < ∞, and Tₘ₄°C represents a melting temperature of the aldehyde-ketone polymer.

Specifically, the preparation process of the sheet-like structure is the same as that for the ether polymer and is not repeated here. When the aldehyde-ketone polymer of the present application satisfies the above range, it can further reduce molecular chain entanglement, facilitating the diffusion of solvent molecules in the electrolyte between the molecular chains. Additionally, the aldehyde-ketone polymer maintains a certain degree of molecular chain entanglement, capable of effectively storing the electrolyte, and improving the cycling performance of the battery cell.

In some embodiments, 0.8 ≤ K₃ ≤ 100; optionally, 0.8 ≤ K₃ ≤ 10. For example, K₃ may be 0.8, 0.85, 0.9, 1, 1.01, 1.1, 2, 5, 10, 15, 20, 30, 50, 100, 200, 500, 1000, 5000, 10000, or a range composed of any two of the above values.

In some embodiments, a glass transition temperature of the aldehyde-ketone polymer is T_{g4}°C, where -20 ≤ T_{g4} ≤ 35. For example, the glass transition temperature of the aldehyde-ketone polymer may be -20°C, -15°C, -10°C, -5°C, -0°C, 5°C, 10°C, 15°C, 20°C, 25°C, 30°C, 35°C, or a range composed of any two of the above values. The aldehyde-ketone polymer has certain mobility above the glass transition temperature, and therefore can buffer external energy through chain segment motion under external force, exhibiting certain flexibility, and capable of acting as a buffer for the charge-discharge process of the positive electrode active material or negative electrode active material during battery cell cycling, thereby mitigating cycling swelling and enhancing cycling performance.

In some embodiments, the aldehyde-ketone polymer includes a compound represented by formula (DI): 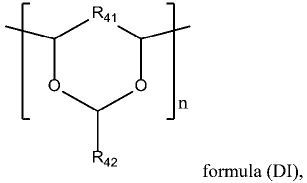 where in formula (DI), R₄₁ includes a single bond or substituted or unsubstituted C1-C6 methylene; and R₄₂ includes a hydrogen atom or substituted or unsubstituted C1-C6 alkyl.

Optionally, R₄₁ includes a single bond or substituted or unsubstituted C1-C2 methylene.

Optionally, R₄₂ includes a hydrogen atom or substituted or unsubstituted C1-C3 alkyl.

In the embodiments of the present application, a single bond means that the group is absent, and the atoms on two sides of the group are connected by a single bond. For example, when R₄₁ is a single bond, it means that the carbon atoms on both sides of R₄₁ are connected by a single bond.

For example, the aldehyde-ketone polymer includes at least one of a compound represented by formula (DI-1) to a compound represented by formula (DI-6):

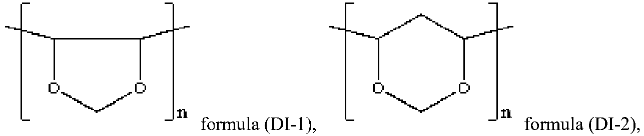

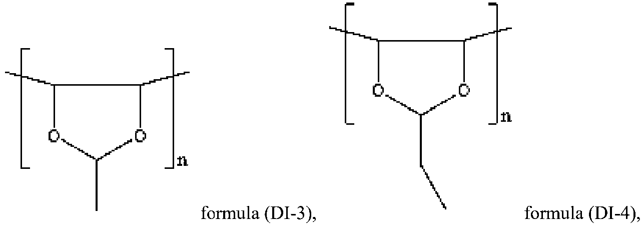

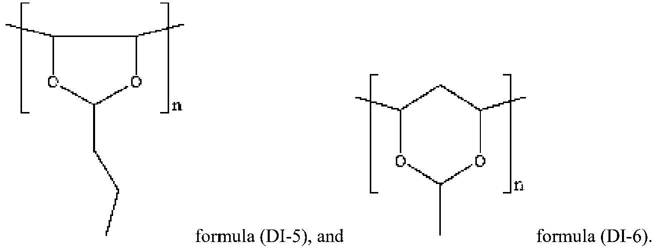

For example, the aldehyde-ketone polymer includes a compound represented by formula (DII): 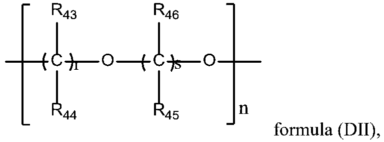 where in formula (DII), R₄₃ to R₄₆ each independently include a hydrogen atom, a hydroxyl group, substituted or unsubstituted C1-C3 alkyl, substituted or unsubstituted C1-C3 hydroxyalkyl, or substituted or unsubstituted C1-C3 alkoxy; r and s are each independently an integer selected from 0 to 5, and at least one of r and s is selected from a positive integer.

Optionally, R₄₃ to R₄₆ each independently include a hydrogen atom, a hydroxyl group, substituted or unsubstituted C1-C3 alkyl, substituted or unsubstituted C1-C2 hydroxyalkyl, or substituted or unsubstituted C1-C2 alkoxy.

In some embodiments, the aldehyde-ketone polymer includes at least one of a compound represented by formula (DII-1) to a compound represented by formula (DII-4): 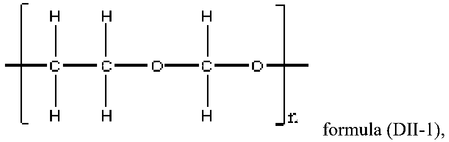 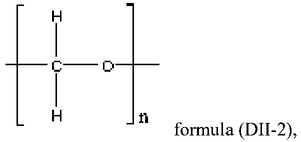 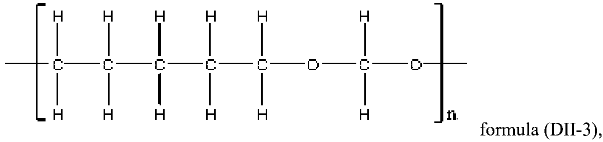 and

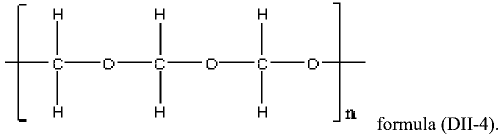

The above polymers are only examples of the structural groups of the main molecular chain. In the embodiments of the present application, the polymer may also be obtained by copolymerizing the above structural groups with other types of structural groups (for example, olefin compounds, enol compounds, or acrylonitrile compounds).

When the above groups are substituted, the substituent may include one or more of a cyano group (-CN), a nitro group, a sulfonic acid group, a sulfonyl group, an amide, a carboxyl group, an ester group, or a halogen atom. The halogen atom may include at least one of a fluorine atom, a bromine atom, or a chlorine atom.

In some embodiments, the degree of polymerization n of the aldehyde-ketone polymer is a positive integer selected from 500 to 15000, for example, 500, 800, 1000, 1500, 2000, 3000, 4000, 5000, 6000, 7000, 8000, 9000, 10000, 11000, 12000, 13000, 14000, 15000, or a range composed of any two of the above values.

Optionally, the degree of polymerization n of the aldehyde-ketone polymer is a positive integer selected from 500 to 10000.

In some embodiments, the molecular weight of the aldehyde-ketone polymer is from 1.2×10⁵ g/mol to 1.2×10⁶ g/mol.

For example, the molecular weight of the aldehyde-ketone polymer may be 1.2×10⁵ g/mol, 2×10⁵ g/mol, 5×10⁵ g/mol, 8×10⁵ g/mol, 1×10⁶ g/mol, 1.0×10⁶ g/mol, 1.2×10⁶ g/mol, or a range composed of any two of the above values.

The relevant parameters of the lyophilic polymer in the embodiments of the present application can be tested using the following methods:
The groups of the lyophilic polymer in the embodiments of the present application can be tested using infrared spectroscopy IR. Specifically, the lyophilic polymer is tested using a Thermo Nicolet Nexus 670 Attenuated Total Reflectance Fourier Transform Infrared Spectrometer (FTIR-ATR), and the test is conducted in accordance with standard GB/T6040-2002, with a test range: ATR method 600-4000 cm⁻¹; repeatability: ±2 cm⁻¹; resolution: better than 4 cm⁻¹; transmission depth 0.2-0.6 µm.

The structure of the lyophilic polymer in the embodiments of the present application can be tested using nuclear magnetic resonance NMR. Specifically, 1H NMR and 13C NMR are performed on a Varian Mercury Plus-400 nuclear magnetic resonance spectrometer, with a test temperature of 20°C, TMS as the internal standard, CDCl₃ as the solvent, and a proton resonance frequency of 400 MHz.

The types of polymer monomers in the lyophilic polymer (especially for monomers with a low proportion in the polymer) in the embodiments of the present application can be tested using pyrolysis-gas chromatography-mass spectrometry. The specific test procedure is as follows: 0.5 mg of the sample is accurately weighed and placed in a sample cup, fixed to the injection rod, and loaded into a pyrolyzer installed near the GC (gas chromatography) injection port. After the pyrolyzer reaches the set temperature, the injection button is pressed, and the sample cup rapidly falls into the pyrolyzer furnace core via free fall. In an inert gas N₂ atmosphere, volatile components are instantly vaporized, carried by the carrier gas into the gas chromatography column for separation, and finally detected by a flame ionization detector FID or mass spectrometer MS, thereby obtaining a gas chromatogram or total ion current chromatogram.

The molecular weight of the lyophilic polymer in the embodiments of the present application has a meaning well-known in the art and can be measured using devices and methods commonly used in the art. It can be tested using gel permeation chromatography GPC in accordance with GB/T21863-2008. The specific test procedure is as follows: an appropriate amount of the sample to be tested is taken (the sample concentration should ensure 8%-12% shading), with 20 ml of deionized water added, and external ultrasound is performed for 5 min (53 kHz/120 W) to ensure complete dispersion of the sample. Then, the sample is measured in accordance with GB/T19077-2016/ISO 13320:2009 standards.

In some embodiments, the positive electrode current collector has two opposing surfaces in its thickness direction, and the positive electrode film layer may be disposed on either or both of the two opposing surfaces of the positive electrode current collector.

In some embodiments, the positive electrode current collector may be a metal foil or a composite current collector. As an example of a metal foil, aluminum foil or aluminum alloy foil may be used. The composite current collector may include a polymer material base layer and a metal material layer formed on at least one surface of the polymer material base layer. As an example, the metal material may include one or more of aluminum, aluminum alloy, nickel, nickel alloy, titanium, titanium alloy, silver, and silver alloy, and the polymer material base layer may include one or more of polypropylene (PP), polyethylene terephthalate (PET), polybutylene terephthalate (PBT), polystyrene (PS), and polyethylene (PE).

In some embodiments, the positive electrode film layer may optionally further include a positive electrode conductive agent. The embodiments of the present application do not impose particular restrictions on the type of positive electrode conductive agent. As an example, the positive electrode conductive agent includes one or more of superconducting carbon, conductive carbon black, conductive graphite, acetylene black, carbon black, Ketjen black, carbon dots, carbon nanotubes, graphene, and carbon nanofibers. In some embodiments, based on the total mass of the positive electrode film layer, the mass percentage content of the positive electrode conductive agent is below 5%.

In some embodiments, the positive electrode film layer may optionally further include a positive electrode binder. The embodiments of the present application do not impose particular restrictions on the type of positive electrode binder. As an example, the positive electrode binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin. In some embodiments, based on the total mass of the positive electrode film layer, the mass percentage content of the positive electrode binder is below 5%. As compared with the crystallinity of the fluorinated polymer of the embodiments of the present application, the crystallinity of the positive electrode binder is higher.

The positive electrode film layer is typically formed by applying a positive electrode slurry on the positive electrode current collector, followed by drying and cold pressing. The positive electrode slurry is typically formed by dispersing the positive electrode active material, the lyophilic polymer, an optional conductive agent, an optional binder, and any other components in a solvent and stirring them to uniformity. The solvent may be N-methylpyrrolidone (NMP), but is not limited thereto. Certainly, the preparation of the positive electrode plate is not limited to the above method and may also adopt the preparation methods described earlier.

### [Negative electrode plate]

In some embodiments, the electrode assembly includes a negative electrode plate, the negative electrode plate including a negative electrode current collector and a negative electrode film layer disposed on at least one side of the negative electrode current collector, the negative electrode film layer including a negative electrode active material and a lyophilic polymer.

In some embodiments, the negative electrode active material includes a silicon-based material. The silicon-based material has a high theoretical capacity, capable of effectively enhancing the energy density of the battery cell.

In some embodiments, based on the total mass of the negative electrode active material, the mass content of the silicon-based material is ≥ 5%; optionally, from 15% to 50%. When the mass content of the silicon-based material is within the above range, it can further enhance the energy density of the battery cell.

For example, the mass content of the silicon-based material may be 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, 50%, or a range composed of any two of the above values.

In some embodiments, the silicon-based material may include at least one of elemental silicon, silicon oxide SiOx (0 < x ≤ 2), silicon-carbon composite, silicon-nitrogen composite, and silicon alloy material.

Elemental silicon may adopt nano-silicon, capable of effectively mitigating particle pulverization caused by volume swelling and shortening the diffusion distance of lithium ions, improving the cycling performance of the negative electrode plate.

In the silicon-carbon composite material, silicon particles can be deposited in the porous structure of carbon particles, making silicon and carbon composite as a whole, where carbon can buffer the volume swelling of silicon, improving the cycling performance of the negative electrode plate.

The silicon alloy material integrates silicon and metal elements, capable of alleviating internal stress in the material during lithium intercalation and deintercalation and enhancing the material's conductivity, thereby helping to improve the overall electrochemical performance of the negative electrode plate. The alloy elements may include titanium, copper, silver, and tin. For example, nano-silicon particles can be used as the core, and metal is used as the shell to cover at least part of the surface of the nano-silicon particles.

In some embodiments, the negative electrode active material may further include a carbon-based material, the carbon-based material including at least one of natural graphite, artificial graphite, soft carbon, and hard carbon. The stability of carbon-based materials is relatively high, and their use in combination with silicon-based materials can enhance the cycle stability and energy density of the negative electrode plate.

In some embodiments, based on the total mass of the negative electrode active material, the mass content of the carbon-based material is ≤ 95%; optionally, from 50% to 85%. For example, the mass content of the carbon-based material may be 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, or a range composed of any two of the above values.

In some embodiments, the negative electrode active material may further include at least one of tin-based materials and lithium titanate.

In some embodiments, based on the total mass of the negative electrode film layer, the mass content of the negative electrode active material is from 80% to 99.9%, optionally from 90% to 99%. When the mass content of the negative electrode active material is within the above range, it is conducive to enhancing the energy density of the battery cell.

In some embodiments, the compacted density of the negative electrode film layer is ≥ 1.5 g/cm³, optionally from 1.5 g/cm³ to 2.0 g/cm³, for example, 1.5 g/cm³, 1.6 g/cm³, 1.7 g/cm³, 1.8 g/cm³, 1.9 g/cm³, 2.0 g/cm³, or a range composed of any two of the above values. When the compacted density of the negative electrode film layer is within the above range, it can significantly enhance the energy density of the battery cell.

In some embodiments, based on the total mass of the negative electrode film layer, the mass content of the lyophilic polymer is ≤ 5%; optionally, from 0.05% to 5%. When the mass content of the lyophilic polymer is within the above range, the lyophilic polymer can form multiple electrolyte storage sites on the surface of the negative electrode active material particles, improving the electrolyte retention capability of the negative electrode film layer, enhancing the wettability of the electrolyte to the negative electrode active material in the negative electrode film layer, thereby helping to improve the cycling performance of the battery cell.

For example, the mass content of the lyophilic polymer may be 0.05%, 0.08%, 0.10%, 0.11%, 0.12%, 0.15%, 0.16%, 0.18%, 0.20%, 0.22%, 0.25%, 0.28%, 0.30%, 0.32%, 0.35%, 0.38%, 0.40%, 0.42%, 0.45%, 0.48%, 0.50%, 0.55%, 0.58%, 0.60%, 0.70%, 0.80%, 0.90%, 0.95%, 1%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.1%, 3.2%, 3.3%, 3.4%, 3.5%, 3.6%, 3.7%, 3.8%, 3.9%, 4.0%, 4.1%, 4.2%, 4.3%, 4.4%, 4.5%, 4.6%, 4.7%, 4.8%, 4.9%, 5.0%, or a range composed of any two of the above values.

In some embodiments, the coating weight of the lyophilic polymer is from 0.5 mg/1540.25 mm² to 5 mg/1540.25 mm², for example, 0.5 mg/1540.25 mm², 0.6 mg/1540.25 mm², 0.7 mg/1540.25 mm², 0.8 mg/1540.25 mm², 0.9 mg/1540.25 mm², 1.0 mg/1540.25 mm², 1.1 mg/1540.25 mm², 1.2 mg/1540.25 mm², 1.3 mg/1540.25 mm², 1.4 mg/1540.25 mm², 1.5 mg/1540.25 mm², 1.6 mg/1540.25 mm², 1.7 mg/1540.25 mm², 1.8 mg/1540.25 mm², 1.9 mg/1540.25 mm², 2.0 mg/1540.25 mm², 2.1 mg/1540.25 mm², 2.2 mg/1540.25 mm², 2.3 mg/1540.25 mm², 2.4 mg/1540.25 mm², 2.5 mg/1540.25 mm², 2.6 mg/1540.25 mm², 2.7 mg/1540.25 mm², 2.8 mg/1540.25 mm², 2.9 mg/1540.25 mm², 3.0 mg/1540.25 mm², 3.1 mg/1540.25 mm², 3.2 mg/1540.25 mm², 3.3 mg/1540.25 mm², 3.4 mg/1540.25 mm², 3.5 mg/1540.25 mm², 3.6 mg/1540.25 mm², 3.7 mg/1540.25 mm², 3.8 mg/1540.25 mm², 3.9 mg/1540.25 mm², 4.0 mg/1540.25 mm², 4.1 mg/1540.25 mm², 4.2 mg/1540.25 mm², 4.3 mg/1540.25 mm², 4.4 mg/1540.25 mm², 4.5 mg/1540.25 mm², 4.6 mg/1540.25 mm², 4.7 mg/1540.25 mm², 4.8 mg/1540.25 mm², 4.9 mg/1540.25 mm², 5.0 mg/1540.25 mm², or a range composed of any two of the above values. The coating weight of the lyophilic polymer is the coating weight in the negative electrode film layer on one side of the negative electrode plate.

In some embodiments, the lyophilic polymer may include at least one of a fluorinated polymer, an ether polymer, an ester polymer, and an aldehyde-ketone polymer. The lyophilic polymer is configured to encapsulate the electrolyte on the surface of the active material, forming effective electrolyte storage sites on the surface of the active material, enhancing the electrolyte retention capability of the electrode plate.

The specific selection principles and types of fluorinated polymers, ether polymers, ester polymers, and aldehyde-ketone polymers are as described in the lyophilic polymers in the positive electrode film layer and are not repeated here.

In some embodiments, the negative electrode current collector has two opposing surfaces in its thickness direction, and the negative electrode film layer is disposed on either or both of the two opposing surfaces of the negative electrode current collector.

In some embodiments, the negative electrode film layer may optionally further include a negative electrode conductive agent. The embodiments of the present application do not impose particular restrictions on the type of negative electrode conductive agent. As an example, the negative electrode conductive agent may include at least one of superconducting carbon, conductive graphite, acetylene black, carbon black, Ketjen black, carbon dots, carbon nanotubes, graphene, and carbon nanofibers. In some embodiments, based on the total mass of the negative electrode film layer, the mass percentage content of the negative electrode conductive agent is ≤ 5%.

In some embodiments, the negative electrode film layer may optionally further include a negative electrode binder. The embodiments of the present application do not impose particular restrictions on the type of negative electrode binder. As an example, the negative electrode binder may include at least one of styrene-butadiene rubber (SBR), water-soluble unsaturated resin SR-1B, aqueous acrylic resin (for example, polyacrylic acid PAA, polymethacrylic acid PMAA, or sodium polyacrylate PAAS), polyacrylamide (PAM), polyvinyl alcohol (PVA), sodium alginate (SA), and carboxymethyl chitosan (CMCS). In some embodiments, based on the total mass of the negative electrode film layer, the mass percentage content of the negative electrode binder is ≤ 5%.

In some embodiments, the negative electrode film layer may optionally further include other additives. As an example, other additives may include thickeners, such as sodium carboxymethyl cellulose (CMC), PTC thermistor materials, and the like. In some embodiments, based on the total mass of the negative electrode film layer, the mass percentage content of other additives is ≤ 2%.

In some embodiments, the negative electrode current collector may be a metal foil or a composite current collector. As an example of a metal foil, copper foil may be used. The composite current collector may include a polymer material base layer and a metal material layer formed on at least one surface of the polymer material base layer. As an example, the metal material may include at least one of copper, copper alloy, nickel, nickel alloy, titanium, titanium alloy, silver, and silver alloy. As an example, the polymer material base layer may include at least one of polypropylene (PP), polyethylene terephthalate (PET), polybutylene terephthalate (PBT), polystyrene (PS), and polyethylene (PE).

The negative electrode film layer is typically formed by applying a negative electrode slurry on the negative electrode current collector, followed by drying and cold pressing. The negative electrode slurry is typically formed by dispersing the negative electrode active material, the lyophilic polymer, an optional conductive agent, an optional binder, and other optional additives in a solvent and stirring them to uniformity. The solvent may be N-methylpyrrolidone (NMP) or deionized water, but is not limited thereto. Certainly, the preparation of the negative electrode plate is not limited to the above method and may also adopt the preparation methods described earlier.

The negative electrode plate does not exclude additional functional layers besides the negative electrode film layer. For example, in some embodiments, the negative electrode plate of the present application further includes a conductive undercoat layer (for example, composed of a conductive agent and a binder) disposed between the negative electrode current collector and the negative electrode film layer on the surface of the negative electrode current collector. In some other embodiments, the negative electrode plate of the present application further includes a protective layer covering the surface of the negative electrode film layer.

### [Separator]

In some embodiments, the battery cell includes a separator.

In some embodiments, the separator includes a substrate.

In some embodiments, the separator includes a substrate and a coating disposed on at least one surface of the substrate.

The embodiments of the present application do not impose particular restrictions on the material of the substrate, and any well-known substrate with good chemical and mechanical stability may be used, such as at least one of glass fiber, nonwoven fabric, polyethylene, polypropylene, and polyvinylidene fluoride. The substrate may be a single-layer film or a multilayer composite film. When the substrate is a multilayer composite film, the materials of each layer may be the same or different.

In some embodiments, the coating may further include a heat-resistant filler. Further, the heat-resistant filler may include at least one of inorganic particles and organic particles.

In some embodiments, the decomposition temperature of the heat-resistant filler may be 200°C or higher, whereby the heat-resistant filler may have good thermal stability and resistance to decomposition, further enhancing the heat resistance of the separator.

Inorganic particles have high thermal stability and resistance to decomposition. Optionally, inorganic particles include at least one of inorganic particles with a dielectric constant of 5 or higher, inorganic particles with ionic conductivity but not storing ions, and inorganic particles capable of undergoing electrochemical reactions.

Optionally, inorganic particles with a dielectric constant of 5 or higher include at least one of boehmite, aluminum oxide, zinc oxide, silicon oxide, titanium oxide, zirconium oxide, barium oxide, calcium oxide, magnesium oxide, nickel oxide, tin oxide, cerium oxide, yttrium oxide, hafnium oxide, aluminum hydroxide, magnesium hydroxide, silicon carbide, boron carbide, aluminum nitride, silicon nitride, boron nitride, magnesium fluoride, calcium fluoride, barium fluoride, barium sulfate, magnesium aluminum silicate, lithium magnesium silicate, sodium magnesium silicate, bentonite, hectorite, zirconium titanate, barium titanate, Pb(Zr,Ti)O₃ (abbreviated as PZT), Pb₁₋ₘLaₘZr₁₋ₙTiₙO₃ (abbreviated as PLZT, where 0 < m < 1, and 0 < n < 1), Pb(Mg₃Nb_{2/3})O₃-PbTiO₃ (abbreviated as PMN-PT), and their respective modified inorganic particles. Optionally, the modification method for each inorganic particle may be chemical modification and/or physical modification. Chemical modification methods include coupling agent modification (for example, using silane coupling agents, and titanate coupling agents), surfactant modification, polymer grafting modification, and the like. Physical modification methods may include mechanical dispersion, ultrasonic dispersion, high-energy treatment, and the like. Modification treatment can reduce the aggregation of inorganic particles, thereby enabling the formation of a more stable and uniform spatial network structure with nanocellulose. Additionally, selecting coupling agents, surface active materials, or polymers with specific functional groups to modify inorganic particles can also help improve the wettability of the coating to the electrolyte and enhance the bonding strength between the coating and the substrate.

Optionally, inorganic particles with ionic conductivity but not storing ions include at least one of Li₃PO₄, lithium titanium phosphate Liₓ₁Ti_{y1}(PO₄)₃, lithium aluminum titanium phosphate Liₓ₂Al_{y2}Ti_{z1}(PO₄)₃, (LiAlTiP)ₓ₃O_{y3} type glass, lithium lanthanum titanate Liₓ₄La_{y4}TiO₃, lithium germanium thiophosphate Liₓ₅Ge_{y5}P_{z2}S_{w}, lithium nitride Liₓ₆N_{y6}, SiS₂ type glass Liₓ₇Si_{y7}S_{z3}, and P₂S₅ type glass Liₓ₈P_{y8}S_{z4}, where 0 < x1 < 2, 0 < y1 < 3, 0 < x2 < 2, 0 < y2 < 1, 0 < z1 < 3, 0 < x3 < 4, 0 < y3 < 13, 0 < x4 < 2, 0 < y4 < 3, 0 < x5 < 4, 0 < y5 < 1, 0 < z2 < 1, 0 < w < 5, 0 < x6 < 4, 0 < y6 < 2, 0 < x7 < 3, 0 < y7 < 2, 0 < z3 < 4, 0 < x8 < 3, 0 < y8 < 3, 0 < z4 < 7. This can further enhance the ion transport properties of the separator.

Organic particles have good thermal stability and resistance to decomposition, thereby enhancing the heat resistance of the separator. Meanwhile, when the internal temperature of the battery cell reaches the melting point of the organic particles due to overcharging, thermal abuse, or the like, the organic particles can melt and be absorbed into the micropores of the substrate due to capillary action, acting to close pores and interrupt the circuit, thus contributing to ensuring high safety performance of the battery cell.

In some embodiments, organic particles include, but are not limited to, at least one of polyethylene particles, polypropylene particles, polystyrene particles, melamine resin particles, phenolic resin particles, polyester particles (for example, polyethylene terephthalate, polyethylene naphthalate, polybutylene terephthalate), polyimide particles, polyamideimide particles, polyaramid particles, polyphenylene sulfide particles, polysulfone particles, polyethersulfone particles, polyetheretherketone particles, polyaryletherketone particles, and copolymers of butyl acrylate and ethyl methacrylate (for example, cross-linked polymers of butyl acrylate and ethyl methacrylate).

In some embodiments, the coating further includes a binder. The present application does not impose particular restrictions on the type of binder, and any well-known material with good adhesion may be used. As an example, the binder includes at least one of aqueous acrylic resin (for example, homopolymers of acrylic acid, methacrylic acid, sodium acrylate monomers, or copolymers with other comonomers), polyvinyl alcohol, isobutylene-maleic anhydride copolymer, and polyacrylamide.

Optionally, the content of the binder in the coating is < 30%, based on the mass of the coating.

### [Electrolyte]

In some embodiments, the battery cell includes an electrolyte.

During the charge-discharge process of the battery cell, active ions intercalate and deintercalate back and forth between the positive electrode plate and the negative electrode plate, and the electrolyte serves to conduct active ions between the positive electrode plate and the negative electrode plate. The present application does not impose particular restrictions on the type of electrolyte, which may be selected based on actual needs.

The electrolyte includes an electrolytic salt and a solvent. The types of electrolytic salt and solvent are not specifically restricted and may be selected based on actual needs.

As an example, the electrolytic salt may include, but is not limited to, at least one of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate (LiPO₂F₂), lithium difluoro(bisoxalato)phosphate (LiDFOP), and lithium tetrafluoro(oxalato)phosphate (LiTFOP).

As an example, the solvent may include, but is not limited to, at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), and diethyl sulfone (ESE).

In some embodiments, the electrolyte may optionally further include an additive. For example, the additive may include a negative electrode film-forming additive, a positive electrode film-forming additive, and an additive that can improve certain battery performance, such as an additive that improves battery overcharge performance, an additive that improves battery high-temperature performance, or an additive that improves battery low-temperature power performance.

In some embodiments, the positive electrode plate, separator, and negative electrode plate may be made into an electrode assembly through a winding process and/or a lamination process.

In some embodiments, the battery cell may include an outer package. The outer package may be used to encapsulate the above electrode assembly and electrolyte.

In some embodiments, the outer package of the battery cell may be a hard shell, such as a hard plastic shell, aluminum shell, or steel shell. The outer package of the battery cell may also be a soft pouch, such as a pouch-type soft package. The material of the soft pouch may be plastic, such as at least one of polypropylene (PP), polybutylene terephthalate (PBT), and polybutylene succinate (PBS).

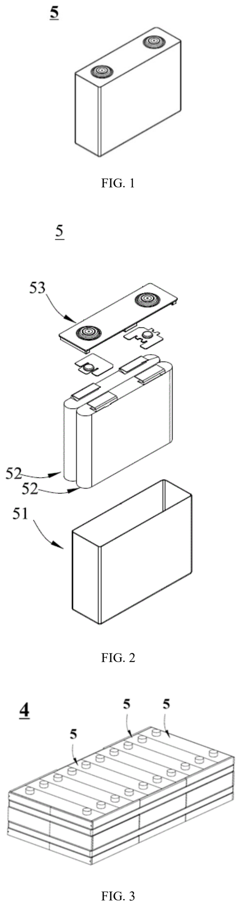

The present application does not impose particular restrictions on the shape of the battery cell, which may be cylindrical, square, or any other shape. FIG. 1 shows a battery cell 5 with a square structure as an example.

In some embodiments, as shown in FIG. 1 and FIG. 2, the outer package may include a housing 51 and a cover plate 53. The housing 51 may include a bottom plate and side plates connected to the bottom plate, with the bottom plate and side plates enclosing a receiving cavity. The housing 51 has an opening communicating with the receiving cavity, and the cover plate 53 is used to cover the opening to seal the receiving cavity. The positive electrode plate, negative electrode plate, and separator may be made into an electrode assembly 52 through a winding process or a lamination process. The electrode assembly 52 is encapsulated in the receiving cavity. The electrolyte is infiltrated into the electrode assembly 52. The number of electrode assemblies 52 included in the battery cell 5 may be one or more, adjustable based on requirements.

The preparation method of the battery cell of the present application is well-known. In some embodiments, the positive electrode plate, separator, negative electrode plate, and electrolyte may be assembled to form a battery cell. As an example, the positive electrode plate, separator, and negative electrode plate may be made into an electrode assembly through a winding process or a lamination process. The electrode assembly was placed in an outer package, dried, injected with electrolyte, and subjected to processes such as vacuum encapsulation, standing, formation, and shaping to obtain a battery cell.

In some embodiments of the present application, the battery cells according to the present application may be assembled into a battery module, and the number of battery cells included in the battery module may be one or more, with the specific number adjustable based on the application and capacity of the battery module.

FIG. 3 is a schematic diagram of a battery module 4 as an example. As shown in FIG. 3, in the battery module 4, multiple battery cells 5 may be sequentially arranged along the length direction of the battery module 4. Certainly, they may also be arranged in any other manner. Further, the multiple battery cells 5 may be fixed by fasteners.

Optionally, the battery module 4 may further include a casing with a receiving space, and the multiple battery cells 5 are accommodated in the receiving space.

In some embodiments, the above battery module may further be assembled into a battery pack, and the number of battery modules included in the battery pack may be adjusted based on the application and capacity of the battery pack.

The battery module 4 and battery pack may both serve as specific examples of the battery in the embodiments of the present application.

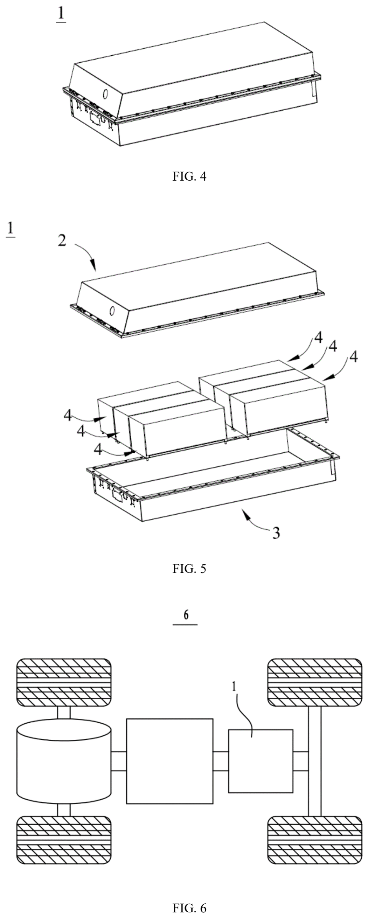

FIG. 4 and FIG. 5 are schematic diagrams of a battery pack 1 as an example. As shown in FIG. 4 and FIG. 5, the battery pack 1 may include a battery case and multiple battery modules 4 disposed in the battery case. The battery case includes an upper case 2 and a lower case 3, with the upper case 2 used to cover the lower case 3, forming a closed space for accommodating the battery modules 4. The multiple battery modules 4 may be arranged in the battery case in any manner.

### Electric apparatus

According to a second aspect, the present application provides an electric apparatus. The electric apparatus includes at least one of the battery cell, battery module, and battery pack of the present application. The battery cell, battery module, and battery pack may be used as a power source for the electric apparatus or as an energy storage unit for the electric apparatus. The electric apparatus may include, but is not limited to, mobile devices (for example, mobile phones, and laptops), electric vehicles (for example, battery electric vehicles, hybrid electric vehicles, plug-in hybrid electric vehicles, electric bicycles, electric scooters, electric golf carts, and electric trucks), electric trains, ships, satellites, energy storage systems, and the like. In some embodiments, the battery cell includes a electrolyte injection hole for injecting the electrolyte. When the battery cell is used in an electric apparatus, the electrolyte injection hole is located at the bottom of the battery cell in the vertical direction. Since the amount of free electrolyte in the battery cell is very small or even absent, placing the electrolyte injection hole at the bottom of the battery cell in the vertical direction can also improve the reliability of the battery cell, thereby enhancing the reliability of the electric apparatus.

The electric apparatus may select a battery cell, battery module, or battery pack based on its usage requirements. FIG. 6 is a schematic diagram of an electric apparatus as an example. The electric apparatus 6 is a battery electric vehicle, hybrid electric vehicle, plug-in hybrid electric vehicle, or the like. To meet the high power and high energy density requirements of the electric apparatus, a battery pack 1 or battery module may be used. As another example, the electric apparatus may be a mobile phone, tablet, laptop, or the like. Such electric apparatuses typically require thin and light designs, and a battery cell may be used as the power source.

### Examples

Hereinafter, examples of the present application are described. The examples described below are exemplary and intended only to explain the present application, and should not be construed as limiting the present application. Where specific techniques or conditions are not specified in the examples, they are carried out according to techniques or conditions described in the literature in the art or according to product specifications. Reagents or instruments used without indicating the manufacturer are all conventional products commercially available.

### Example 1: Preparation of lithium-ion battery

### (1) Preparation of positive electrode plate:

A lyophilic polymer, a positive electrode active material, a conductive agent carbon black, and a binder polyvinylidene fluoride (PVDF) were mixed in a mass ratio of 0.2:97.8:1:1 in N-methylpyrrolidone (NMP) to form a positive electrode slurry. The positive electrode slurry was applied on an aluminum foil current collector, dried at 85°C, cold-pressed, then cut, slit, and dried under vacuum at 85°C for 4 h to form a positive electrode plate. The crystallinity of the binder polyvinylidene fluoride (PVDF) was 48%.

### (2) Preparation of negative electrode plate:

A lyophilic polymer, a negative electrode active material, a conductive agent carbon black, a binder styrene-butadiene rubber (SBR), and a thickener sodium carboxymethyl cellulose (CMC) were mixed well in a mass ratio of 2:94.5:0.5:2:1 in deionized water to form a negative electrode slurry. The negative electrode slurry was applied on a copper foil current collector, dried at 85°C, cold-pressed, then cut, slit, and dried under vacuum at 120°C for 12 h to form a negative electrode plate.

### (3) Preparation of electrolyte:

The electrolyte includes an organic solvent and a lithium salt, the organic solvent including ethylene carbonate EC and ethyl methyl carbonate (EMC) (volume ratio 3:7), and the lithium salt including 1 mol/L LiPF₆.

### (4) Preparation of lithium-ion battery:

A polyethylene film (PE) was used as a separator. The positive electrode plate, separator, and negative electrode plate were stacked in order, with the separator placed between the positive electrode plate and negative electrode plate for separation, and then wound to obtain an electrode assembly. The electrode assembly was placed in an outer package shell, dried, injected with electrolyte, and subjected to vacuum sealing, standing, formation, shaping, and other processes to obtain a lithium-ion battery.

### Examples 2 to 6

Lithium-ion batteries were prepared using a method similar to Example 1. Different from Example 1, Examples 2 to 6 adjusted the types of lyophilic polymers.

### Examples 7 to 16

Lithium-ion batteries were prepared using a method similar to Example 1. Different from Example 1, Examples 7 to 16 adjusted the amounts of lyophilic polymers used.

### Examples 17 to 20

Lithium-ion batteries were prepared using a method similar to Example 1. Different from Example 1, Examples 17 to 20 adjusted the types of active materials.

### Examples 21 to 23

Lithium-ion batteries were prepared using a method similar to Example 1. Different from Example 1, Examples 21 to 23 adjusted the crystal grain structure of the positive electrode active material.

### Comparative Example 1

A lithium-ion battery was prepared using a method similar to Example 1. Different from Example 1, Comparative Example 1 did not use a lyophilic polymer, and the plate preparation process was as follows:

### (1) Preparation of positive electrode plate:

A positive electrode active material, a conductive agent carbon black, and a binder polyvinylidene fluoride (PVDF) were mixed in a mass ratio of 97.5:2:0.5 in N-methylpyrrolidone (NMP) to form a positive electrode slurry. The positive electrode slurry was applied on an aluminum foil current collector, dried at 85°C, cold-pressed, then cut, slit, and dried under vacuum at 85°C for 4 h to form a positive electrode plate. The crystallinity of the binder polyvinylidene fluoride (PVDF) was 48%.

### (2) Preparation of negative electrode plate:

The negative electrode active material, conductive agent carbon black, binder styrene-butadiene rubber (SBR), and thickener sodium carboxymethyl cellulose (CMC) were mixed well in a weight ratio of 94.9:2:0.5:2.6 in deionized water to form a negative electrode slurry. The negative electrode slurry was applied on a copper foil current collector, dried at 85°C, cold-pressed, then cut, slit, and dried under vacuum at 120°C for 12 h to form the negative electrode plate.

### Comparative Example 2

A lithium-ion battery was prepared using a method similar to Example 1. Different from Example 1, Comparative Example 2 adjusted the type of polymer.

### Test section

### 1. Test for capacity retention rate of lithium-ion battery

The lithium-ion battery prepared in each example and comparative example was charged at a constant current of 1C to 4.25 V in a 45°C environment, then charged at a constant voltage of 4.25 V until the current reached 0.05C, left standing for 5 min, and then discharged at 1C to 2.8 V, with the resulting capacity recorded as the initial capacity C0. The above steps were repeated for the same battery, and the discharge capacity Cn of the battery after the nth cycle was recorded, with the capacity retention rate Pn of battery = Cn/C0 × 100%. 1200 point values P1, P2, ..., P1200 were used as the ordinate and the corresponding cycle numbers were used as the abscissa, and a scatter plot of capacity retention rate versus cycle number of the battery was obtained.

During this test, the first cycle corresponded to n=1, the second cycle corresponded to n=2, ..., and the 1200th cycle corresponded to n=1200. For example, the capacity retention rate data corresponding to the battery in Example 1 in Table 1 was measured after 1200 cycles under the above test conditions, that is, the value of P1200. The test processes for Comparative Example 1 and other examples were the same as described above.

### 2. Test for direct current impedance of lithium-ion battery

The lithium-ion battery prepared in each example and comparative example was charged at a constant current of 1/3C to 4.25 V at 45°C, then charged at a constant voltage of 4.25 V until the current reached 0.05C, and left standing for 5 min. The voltage V1 was recorded. Then, they were discharged at 1/3C for 30s, and the voltage V2 was recorded. The internal resistance DCR1 of the battery after the first cycle was calculated as (V2 - V1)/(1/3C). The above steps were repeated for the same battery, and the internal resistance DCRn (n = 1, 2, 3, ..., 1200) of the nth cycle of the battery was recorded. 1200 point values DCR1, DCR2, DCR3, ..., DCR1200 were used as the ordinate and the corresponding cycle numbers were used as the abscissa, and a curve of discharge DCIR versus cycle number was obtained for the battery corresponding to the polymer in each example and comparative example.

During this test, the first cycle corresponded to n=1, the second cycle corresponds to n=2, ..., and the 1200th cycle corresponded to n=1200. For example, the internal resistance increase ratio of the battery in Example 1 in Table 1 = (DCRn - DCR1)/DCR1 × 100%. The test processes for Comparative Example 1 and other examples were the same as described above. The data in Table 1 were measured after 1200 cycles under the above test conditions.

### Test results

The test results are shown in Tables 1 to 4.

**Table 1**

| Component | Monomer | Slope K | Glass transition temperature Tg (°C) | Crystallinity Xc | Melting temperature Tₘ (°C) |
|---|---|---|---|---|---|
| Lyophilic polymer A | 85% vinylidene fluoride + 15% perfluoropropylene | / | 15 | 12% | 120 |
| Lyophilic polymer B | 85% vinyl acetate + 15% ethylene | 1.5 | 0 | / | / |
| Lyophilic polymer C | 88% vinyl ethyl ether + 12% vinyl acetate | 1.3 | 0 | / | / |
| Lyophilic polymer D | 25% PVA polyvinyl alcohol + 75% formaldehyde | 1.2 | 0 | / | / |
| Lyophilic polymer E | 75% vinylidene fluoride + 20% perfluoropropylene + 5% sulfonic acid-modified vinylidene fluoride | / | 10 | 8% | 110 |
| Lyophilic polymer F | 100% ethyl acrylate | 1.5 | 10 | / | / |
| Comparative polymer H | Polyvinylidene fluoride | / | 30 | 48% | 155 |

In Table 1, 85% vinylidene fluoride + 15% perfluoropropylene in the monomer indicates that, based on the total mass of the monomer, the mass content of vinylidene fluoride is 85%, and the mass content of perfluoropropylene is 15%.

**Table 2**

| No. | Polymer | Positive electrode plate | | | | | |
|---|---|---|---|---|---|---|---|
| | | Lyophilic polymer content | Positive electrode active material | | | | Compacted density (g/cm³) |
| | | | Type | Single crystal particle size (µm) | Single crystal particle content | Polycrystalline particle size (µm) | |
| Example 1 | Lyophilic polymer A | 0.20% | LiNi_{0.92}Co_{0.05}M_{0.03}O₂ | 5 | 20% | 10 | 3.6 |
| Example 2 | Lyophilic polymer B | 0.20% | LiNi_{0.92}Co_{0.05}M_{0.03}O₂ | 5 | 20% | 10 | 3.6 |
| Example 3 | Lyophilic polymer C | 0.20% | LiNi_{0.92}Co_{0.05}M_{0.03}O₂ | 5 | 20% | 10 | 3.6 |
| Example 4 | Lyophilic polymer D | 0.20% | LiNi_{0.92}Co_{0.05}M_{0.03}O₂ | 5 | 20% | 10 | 3.6 |
| Example 5 | Lyophilic polymer E | 0.20% | LiNi_{0.92}Co_{0.05}M_{0.03}O₂ | 5 | 20% | 10 | 3.6 |
| Example 6 | Lyophilic polymer F | 0.20% | LiNi_{0.92}Co_{0.05}M_{0.03}O₂ | 5 | 20% | 10 | 3.6 |
| Example 7 | Lyophilic polymer A | 0.10% | LiNi_{0.92}Co_{0.05}M_{0.03}O₂ | 5 | 20% | 10 | 3.6 |
| Example 8 | Lyophilic polymer A | 0.05% | LiNi_{0.92}Co_{0.05}M_{0.03}O₂ | 5 | 20% | 10 | 3.6 |
| Example 9 | Lyophilic polymer A | 0.50% | LiNi_{0.92}Co_{0.05}M_{0.03}O₂ | 5 | 20% | 10 | 3.6 |
| Example 10 | Lyophilic polymer A | 1.50% | LiNi_{0.92}Co_{0.05}M_{0.03}O₂ | 5 | 20% | 10 | 3.6 |
| Example 11 | Lyophilic polymer A | 0% | LiNi_{0.92}Co_{0.05}M_{0.03}O₂ | 5 | 20% | 10 | 3.6 |
| Example 12 | Lyophilic polymer A | 0.20% | LiNi_{0.92}Co_{0.05}M_{0.03}O₂ | 5 | 20% | 10 | 3.6 |
| Example 13 | Lyophilic polymer A | 0.20% | LiNi_{0.92}Co_{0.05}M_{0.03}O₂ | 5 | 20% | 10 | 3.6 |
| Example 14 | Lyophilic polymer A | 0.20% | LiNi_{0.92}Co_{0.05}M_{0.03}O₂ | 5 | 20% | 10 | 3.6 |
| Example 15 | Lyophilic polymer A | 0.20% | LiNi_{0.92}Co_{0.05}M_{0.03}O₂ | 5 | 20% | 10 | 3.6 |
| Example 16 | Lyophilic polymer A | 0.20% | LiNi_{0.92}Co_{0.05}M_{0.03}O₂ | 5 | 20% | 10 | 3.6 |
| Example 17 | Lyophilic polymer A | 0.20% | LiNi_{0.93}Co_{0.03}M_{0.04}O₂ | 5 | 20% | 10 | 3.6 |
| Example 18 | Lyophilic polymer A | 0.20% | LiNi_{0.85}Co_{0.10}M_{0.05}O₂ | 5 | 20% | 10 | 3.6 |
| Example 19 | Lyophilic polymer A | 0.20% | LiNi_{0.92}Co_{0.05}M_{0.03}O₂ | 5 | 20% | 10 | 3.6 |
| Example 20 | Lyophilic polymer A | 0.20% | LiNi_{0.92}Co_{0.05}M_{0.03}O₂ | 5 | 20% | 10 | 3.6 |
| Example 21 | Lyophilic polymer A | 0.20% | LiNi_{0.92}Co_{0.05}M_{0.03}O₂ | 5 | 30% | 10 | 3.7 |
| Example 22 | Lyophilic polymer A | 0.20% | LiNi_{0.92}Co_{0.05}M_{0.03}O₂ | 5 | 20% | 12 | 3.55 |
| Example 23 | Lyophilic polymer A | 0.20% | LiNi_{0.92}Co_{0.05}M_{0.03}O₂ | 4 | 20% | 10 | 3.65 |
| Comparative Example 1 | None | 0% | LiNi_{0.92}Co_{0.05}M_{0.03}O₂ | 5 | 20% | 10 | 3.6 |
| Comparative Example 2 | Comparative polymer H | 0.20% | LiNi_{0.92}Co_{0.05}M_{0.03}O₂ | 5 | 20% | 10 | 3.6 |

**Table 3**

| No. | Polymer | Negative electrode plate | | |
|---|---|---|---|---|
| | | Lyophilic polymer content | Type of negative electrode active material | Compacted density (g/cm³) |
| Example 1 | Lyophilic polymer A | 2% | 88% artificial graphite + 12% SiOₓ | 1.6 |
| Example 2 | Lyophilic polymer B | 2% | 88% artificial graphite + 12% SiOₓ | 1.6 |
| Example 3 | Lyophilic polymer C | 2% | 88% artificial graphite + 12% SiOₓ | 1.6 |
| Example 4 | Lyophilic polymer D | 2% | 88% artificial graphite + 12% SiOₓ | 1.6 |
| Example 5 | Lyophilic polymer E | 2% | 88% artificial graphite + 12% SiOₓ | 1.6 |
| Example 6 | Lyophilic polymer F | 2% | 88% artificial graphite + 12% SiOₓ | 1.6 |
| Example 7 | Lyophilic polymer A | 2% | 88% artificial graphite + 12% SiOₓ | 1.6 |
| Example 8 | Lyophilic polymer A | 2% | 88% artificial graphite + 12% SiOₓ | 1.6 |
| Example 9 | Lyophilic polymer A | 2% | 88% artificial graphite + 12% SiOₓ | 1.6 |
| Example 10 | Lyophilic polymer A | 2% | 88% artificial graphite + 12% SiOₓ | 1.6 |
| Example 11 | Lyophilic polymer A | 2% | 88% artificial graphite + 12% SiOₓ | 1.6 |
| Example 12 | Lyophilic polymer A | 1% | 88% artificial graphite + 12% SiOₓ | 1.6 |
| Example 13 | Lyophilic polymer A | 0.5% | 88% artificial graphite + 12% SiOₓ | 1.6 |
| Example 14 | Lyophilic polymer A | 3% | 88% artificial graphite + 12% SiOₓ | 1.6 |
| Example 15 | Lyophilic polymer A | 5% | 88% artificial graphite + 12% SiOₓ | 1.6 |
| Example 16 | Lyophilic polymer A | 0% | 88% artificial graphite + 12% SiOₓ | 1.6 |
| Example 17 | Lyophilic polymer A | 2% | 88% artificial graphite + 12% SiOₓ | 1.6 |
| Example 18 | Lyophilic polymer A | 2% | 88% artificial graphite + 12% SiOₓ | 1.6 |
| Example 19 | Lyophilic polymer A | 2% | 90% artificial graphite + 25% SiOₓ | 1.55 |
| Example 20 | Lyophilic polymer A | 2% | 95% artificial graphite + 35% SiOx | 1.5 |
| Example 21 | Lyophilic polymer A | 2% | 88% artificial graphite + 12% SiOx | 1.6 |
| Example 22 | Lyophilic polymer A | 2% | 88% artificial graphite + 12% SiOx | 1.6 |
| Example 23 | Lyophilic polymer A | 2% | 88% artificial graphite + 12% SiOx | 1.6 |
| Comparative Example 1 | None | 0% | 88% artificial graphite + 12% SiOx | 1.6 |
| Comparative Example 2 | Comparative polymer H | 2% | 88% artificial graphite + 12% SiOx | 1.6 |

In Tables 2 and 3, a lyophilic polymer content of 0.2% in the positive electrode plate indicates that, based on the total mass of the positive electrode film layer, the mass content of the lyophilic polymer is 0.2%.

A lyophilic polymer content of 0% in the positive electrode plate indicates that no lyophilic polymer is added to the positive electrode film layer.

A lyophilic polymer content of 2% in the negative electrode plate indicates that, based on the total mass of the negative electrode film layer, the mass content of the lyophilic polymer is 2%.

A lyophilic polymer content of 0% in the negative electrode plate indicates that no lyophilic polymer is added to the negative electrode film layer.

The negative electrode active material consisting of 88% artificial graphite + 12% SiOₓ indicates that, based on the total mass of the negative electrode active material, the mass content of artificial graphite is 88%, and the mass content of silicon oxide SiOₓ (0 < x ≤ 2) is 12%.

**Table 4**

| No. | Battery performance | | |
|---|---|---|---|
| | Cycle life @80% SOH (cycles) | DCIR | Energy density (Wh/kg) |
| Example 1 | 800 | 30% | 305 |
| Example 2 | 800 | 30% | 305 |
| Example 3 | 780 | 32% | 305 |
| Example 4 | 780 | 32% | 305 |
| Example 5 | 800 | 30% | 305 |
| Example 6 | 800 | 30% | 305 |
| Example 7 | 800 | 30% | 305 |
| Example 8 | 790 | 31% | 305 |
| Example 9 | 820 | 28% | 305 |
| Example 10 | 790 | 31% | 305 |
| Example 11 | 790 | 31% | 305 |
| Example 12 | 800 | 30% | 305 |
| Example 13 | 800 | 30% | 305 |
| Example 14 | 850 | 25% | 303 |
| Example 15 | 870 | 26% | 300 |
| Example 16 | 780 | 32% | 308 |
| Example 17 | 750 | 35% | 308 |
| Example 18 | 850 | 25% | 302 |
| Example 19 | 600 | 60% | 310 |
| Example 20 | 400 | 80% | 320 |
| Example 21 | 800 | 30% | 308 |
| Example 22 | 800 | 30% | 302 |
| Example 23 | 800 | 30% | 308 |
| Comparative Example 1 | 700 | 42% | 305 |
| Comparative Example 2 | 700 | 45% | 305 |

From Table 4, it can be seen that no lyophilic polymer is added to the positive electrode plate and negative electrode plate of Comparative Example 1. During the cycling of the lithium-ion battery, due to volume change in the lithium-ion battery, the electrolyte within the electrode assembly may be squeezed out, leading to a lack of electrolyte, resulting in poor wettability of the electrode plate and deteriorating the cycling performance of the lithium-ion battery.

Although the polymer is added to the plate in Comparative Example 2, this polymer has poor lyophilic capability, not only resulting in low electrolyte retention efficiency but also deteriorating the battery's kinetic performance due to its high impedance.

In the examples of the present application, adding the lyophilic polymer to at least one of the positive electrode plate and the negative electrode plate enables the lyophilic polymer to have a strong affinity with the electrolyte, capable of storing the electrolyte on the surface of the active material particles of the electrode plate, enhancing the electrolyte retention capability of the electrode plate, improving the wettability of the electrolyte to the film layer, mitigating concentration polarization, and enhancing the cycling performance of the battery.

Although illustrative embodiments have been shown and described, those skilled in the art should understand that the above embodiments are not to be construed as limiting the present application, and changes, substitutions, and modifications may be made to the embodiments without departing from the spirit, principles, and scope of the present application.

## Claims

1. A battery comprising an electrode plate, wherein the electrode plate comprises a current collector and a film layer disposed on at least one side of the current collector, and the film layer comprises an active material and a lyophilic polymer,
wherein an energy density of the battery is ≥ 300 Wh/kg.

2. The battery according to claim 1, wherein the energy density of the battery is from 300 Wh/kg to 500 Wh/kg.

3. The battery according to claim 1 or 2, wherein the electrode plate comprises a positive electrode plate, and an active material in the positive electrode plate comprises a compound with a molecular formula LiₓNiₐCo_{b}M_{(1-a-b)}O₂ and its modified compounds, wherein 0.60 ≤ x ≤ 1.20, 0.85 ≤ a < 1.00, 0 < b ≤ 0.10, a + b < 1.00, and M comprises at least one of Mn, Al, B, Zr, Sr, Y, Sb, W, Ti, La, and Nb;
optionally, 0.90 ≤ a < 1.0; and
further optionally, the active material in the positive electrode plate comprises at least one of compounds with molecular formulas LiNi_{0.85}Co_{0.10}M_{0.05}O₂, LiNi_{0.92}Co_{0.04}Mo_{0.04}O₂, LiNi_{0.92}Co_{0.05}Mo_{0.03}O₂, LiNi_{0.92}Co_{0.06}Mo_{0.02}O₂, LiNi_{0.93}Co_{0.03}M_{0.04}O₂, and LiNi_{0.93}Co_{0.025}M_{0.045}O₂.

4. The battery according to claim 3, wherein the active material in the positive electrode plate comprises single crystal particles and polycrystalline particles, a volume-based median particle size Dᵥ50 of the single crystal particles being smaller than a volume-based median particle size Dᵥ50 of the polycrystalline particles;
optionally,
the volume-based median particle size Dᵥ50 of the single crystal particles is from 2 µm to 5 µm;
optionally,
the volume-based median particle size Dᵥ50 of the polycrystalline particles is from 5 µm to 10 µm; and
optionally,
based on a total mass of the active material in the positive electrode plate, a mass content of the single crystal particles is from 10% to 30%.

5. The battery according to claim 3 or 4, wherein a compacted density of a film layer in the positive electrode plate is ≥ 3.6 g/cm³, optionally from 3.6 g/cm³ to 3.8 g/cm³.

6. The battery according to any one of claims 1 to 5, wherein the electrode plate comprises a negative electrode plate, an active material in the negative electrode plate comprising at least a silicon-based material; wherein
optionally, the silicon-based material comprises at least one of elemental silicon, silicon oxide, silicon-carbon composite, silicon-nitrogen composite, and silicon alloy material;
optionally, based on a total mass of the active material in the negative electrode plate, a mass content of the silicon-based material is ≥ 5%; optionally, from 15% to 50%; and
optionally, a compacted density of the negative electrode film layer is ≥ 1.5 g/cm³, optionally from 1.5 g/cm³ to 2.0 g/cm³.

7. The battery according to any one of claims 1 to 6, wherein based on a total mass of the film layer, a mass content of the lyophilic polymer is ≤ 5%; optionally, from 0.05% to 5%; and/or
a coating weight of the lyophilic polymer is from 0.5 mg/1540.25 mm² to 5 mg/1540.25 mm².

8. The battery according to any one of claims 1 to 7, wherein the lyophilic polymer comprises a fluorinated polymer, the fluorinated polymer having a crystallinity measured by differential scanning calorimetry and denoted as Xc₁%, wherein 0 < Xc₁ ≤ 28; wherein
a melting temperature of the fluorinated polymer is Tₘ₁°C, wherein 0 < Tₘ₁ ≤ 130;
further optionally, a glass transition temperature of the fluorinated polymer is T_{g1}°C, wherein -30 ≤ T_{g1} ≤ 40; and
further optionally, the fluorinated polymer comprises at least one of a compound represented by formula (AI) to a compound represented by formula (AIII): 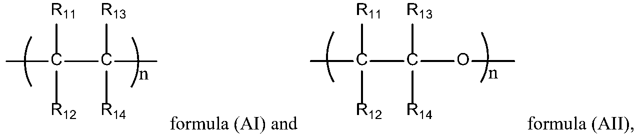
wherein in formula (AI) and formula (AII), R₁₁, R₁₂, R₁₃, and R₁₄ each independently comprise a hydrogen atom, a fluorine atom, a chlorine atom, a bromine atom, substituted or unsubstituted C1-C3 alkyl, or substituted or unsubstituted C1-C3 alkoxy, and at least one of R₁₁, R₁₂, R₁₃, and R₁₄ comprises a fluorine atom; and 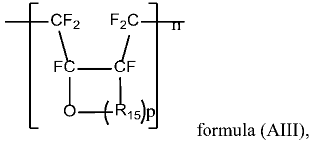
wherein in formula (AIII), R₁₅ comprises a single bond or substituted or unsubstituted C1-C3 alkyl;
p is a positive integer selected from 1 to 3; and
n is a positive integer selected from 1000 to 30000.

9. The battery according to any one of claims 1 to 8, wherein the lyophilic polymer comprises an ether polymer, the ether polymer is made into a sheet-like structure, a storage modulus G' - loss modulus G" curve of the sheet-like structure is obtained by subjecting it to dynamic frequency sweep testing at (Tₘ₂ + 20)°C, and a slope of the storage modulus G' - loss modulus G" curve is K₁, wherein 1 < K₁ < ∞, Tₘ₂°C represents a melting temperature of the ether polymer, optionally, 1 < K₁ ≤ 100, and further optionally, 1 < K₁ ≤ 10;
optionally, a glass transition temperature of the ether polymer is T_{g2}°C, wherein -20 ≤ T_{g2} ≤ 35; and
further optionally, the ether polymer comprises at least one of a compound represented by formula (BI) and a compound represented by formula (BII): 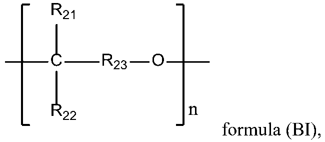
wherein in formula (BI), R₂₁ and R₂₂ each independently comprise a hydrogen atom, substituted or unsubstituted C1-C3 alkyl, or substituted or unsubstituted C1-C3 alkoxy; and R₂₃ comprises substituted or unsubstituted C1-C5 alkylene; and 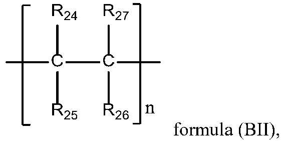
wherein in formula (BII), R₂₄ to R₂₇ each independently comprise a hydrogen atom, substituted or unsubstituted C1-C3 alkyl, substituted or unsubstituted C1-C3 alkoxy, or an ether group, and at least one of R₂₄ to R₂₇ comprises substituted or unsubstituted C1-C3 alkoxy or an ether group; and
a degree of polymerization n of the ether polymer is a positive integer selected from 1500 to 25000.

10. The battery according to any one of claims 1 to 9, wherein the lyophilic polymer comprises the ester polymer, the ester polymer is made into a sheet-like structure, a storage modulus G' - loss modulus G" curve of the sheet-like structure is obtained by subjecting it to dynamic frequency sweep testing at (Tₘ₃ + 20)°C, and a slope of the storage modulus G' - loss modulus G" curve is K₂, wherein 1 < K₂ < ∞, Tₘ₃°C represents a melting temperature of the ester polymer, optionally, 1 < K₂ ≤ 100, and further optionally, 1 < K₂ ≤ 10;
optionally, a glass transition temperature of the ester polymer is T_{g3}°C, wherein -20 ≤ T_{g3} ≤ 35; and
further optionally, the ester polymer comprises at least one of a compound represented by formula (CI) to a compound represented by formula (CIII): 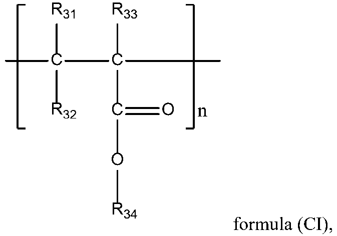
wherein in formula (CI), R₃₁, R₃₂, and R₃₃ each independently comprise a hydrogen atom or substituted or unsubstituted C1-C8 alkyl; and R₃₄ comprises substituted or unsubstituted C1-C8 alkyl or substituted or unsubstituted C1-C8 hydroxyalkyl; 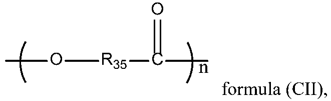
wherein in formula (CII), R₃₅ comprises substituted or unsubstituted C2-C6 methylene; and optionally, R₃₅ independently comprises substituted or unsubstituted C2-C4 methylene; and 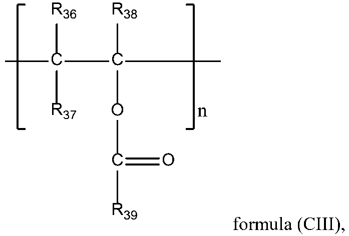
wherein in formula (CIII), R₃₆, R₃₇, and R₃₈ each independently comprise a hydrogen atom or substituted or unsubstituted C1-C8 alkyl; and R₃₉ comprises substituted or unsubstituted C1-C8 alkyl;
optionally, R₃₆, R₃₇, and R₃₈ each independently comprise a hydrogen atom or substituted or unsubstituted C1-C4 alkyl; and
a degree of polymerization n of the ester polymer is a positive integer selected from 800 to 20000.

11. The battery according to any one of claims 1 to 10, wherein the lyophilic polymer comprises an aldehyde-ketone polymer, the aldehyde-ketone polymer is made into a sheet-like structure, a storage modulus G' - loss modulus G" curve of the sheet-like structure is obtained by subjecting it to dynamic frequency sweep testing at (Tₘ₄ + 20)°C, a slope of the storage modulus G' - loss modulus G" curve is K₃, wherein 0.8 ≤ K₃ < ∞, Tₘ₄°C represents a melting temperature of the aldehyde-ketone polymer, optionally, 0.8 ≤ K₃ ≤ 100, and further optionally, 0.8 ≤ K₃ ≤ 10;
optionally, a glass transition temperature of the aldehyde-ketone polymer is T_{g4}°C, wherein -20 ≤ T_{g4} ≤ 35; and
further optionally, the aldehyde-ketone polymer comprises at least one of a compound represented by formula (DI) and a compound represented by formula (DII): 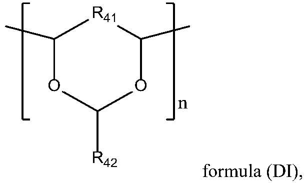
wherein in formula (DI), R₄₁ comprises a single bond or substituted or unsubstituted C1-C6 methylene; and R₄₂ comprises a hydrogen atom or substituted or unsubstituted C1-C6 alkyl; and 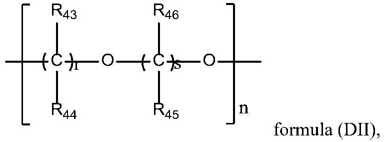
wherein in formula (DII), R₄₃ to R₄₆ each independently comprise a hydrogen atom, a hydroxyl group, substituted or unsubstituted C1-C3 alkyl, substituted or unsubstituted C1-C3 hydroxyalkyl, or substituted or unsubstituted C1-C3 alkoxy;
r and s are each independently an integer selected from 0 to 5, and at least one of r and s is selected from a positive integer; and
a degree of polymerization n of the aldehyde-ketone polymer is a positive integer selected from 500 to 15000.

12. The battery according to any one of claims 1 to 11, wherein a molecular weight of the lyophilic polymer is from 2.0×10⁵ g/mol to 1.2×10⁶ g/mol.

13. An electric apparatus comprising the battery according to any one of claims 1 to 12.
